# EUROPÄISCHE PATENTSCHRIFT

(11) **EP 0 287 981 B1**
(45) Veröffentlichungstag und Bekanntmachung des Hinweises auf die Patenterteilung: **25.08.1993**
(21) Anmeldenummer: 88106117.0
(22) Anmeldetag: 16.04.1988
(51) Int. Cl.: F16B 5/06, F16B 12/18, E04B 1/61, F16B 12/20

(54) **Verbinder zum Verbinden zweier Bauelemente**
Connector for connecting two structural elements
Connecteur pour le raccordement de deux éléments

(30) Priorität: 22.05.1987 AT 1313/87; 22.04.1987 DE 3713483
(43) Veröffentlichungstag der Anmeldung: 26.10.1988
(73) Patentinhaber: Julius Blum Gesellschaft m.b.H., 6973 Höchst (AT)
(72) Erfinder: Röck, Erich, A-6973 Höchst (AT); Brüstle, Klaus, A-6923 Lauterach (AT); Maier, Friedrich, D-7250 Leonberg (DE); Dubach, Fredi, CH-8345 Adetswil (CH)
(74) Vertreter: Torggler, Paul, Dr.

(56) Entgegenhaltungen:
- EP-A- 0 031 185
- AT-B- 27 579
- DE-A- 3 146 805
- DE-A- 3 236 719
- DE-A- 3 405 571
- DE-A- 3 522 670
- DE-U- 7 047 932

## Beschreibung

Die Erfindung betrifft einen Verbinder zum Verbinden zweier Bauelemente, vorzugsweise zum stirnseitigen Verbinden zweier Platten, mit zwei Beschlagteilen, die im Verbindungsbereich jedes Bauelementes vormontierbar sind, mit mindestens einem Zuganker, der jeweils auf einem der Beschlagteile abgestützt ist und der mit Hilfe von Spannmitteln eine die Beschlagteile verbindende Zugkraft ausübt.

Derartige Verbinder sind bereits in den verschiedensten Ausführungen bekannt. Insbesondere beim stirnseitigen Verbinden von Platten ist es wichtig, daß die Oberflächen genau in einer Ebene liegen, da auch eine geringe Stufe die Arbeit auf den Platten sehr behindern wird. Außerdem sind solche Stufen aus ästhetischen Gründen unvorteilhaft. Bei bekannten Verbindern, die nur einen Zuganker aufweisen, konnten die Platten oder die Bauelemente nur durch mühsames und zeitaufwendiges Zurechtrücken in die richtige Lage gebracht werden.

Die AT-B-27579 zeigt einen zweiteiligen Verbinder für zwei Bauelemente eines Kastens, wobei der auf dem einen Bauelement angebrachte Verbinderteil ein Haken ist, der hinten einen federbelasteten Riegel einrasten kann, welcher als zweiter Verbinderteil am anderen Bauelement schwenkbar gelagert ist. Zur Festlegung der relativen Lage der Bauelemente senkrecht zur Verbindungsrichtung weisen die Bauelemente selbst eine Nut-Feder-Ausbildung an ihren Stirnseiten auf. Eine solche Nut-Feder-Verbindung läßt sich vor allem bei beschichteten Preßspannplatten - wie sie häufig zum Einsatz kommen - kaum mit ausreichender Präzision ausbilden. Auch ein gegenseitiges Justieren der beiden Bauelemente der AT-B-27579 bei der Montage ist nicht möglich.

Aufgabe der Erfindung ist es, einen speziell zum stirnseitigen Verbinden zweier Platten angepaßten Verbinder der eingangs genannten Gattung zu schaffen, mit dem die Bauelemente bzw. Platten vor dem eigentlichen Zusammenspannen relativ zueinander justierbar sind, sodaß sie sich ohne Ausbildung von Stufen schnell und exakt verbinden lassen.

Dies wird gemäß einem Aspekt der Erfindung dadurch erreicht, daß der Verbinder eine Stelleinrichtung zur Einstellung der gegenseitigen Lage der Beschlagteile im wesentlichen senkrecht zur Zugrichtung des Zugankers aufweist, wobei die Stelleinrichtung einen in einem der Beschlagteile schwenkbar gelagerten Hebel aufweist, dessen Schwenkachse senkrecht zur Zugrichtung des Zugankers und senkrecht zur Verstellrichtung der Stelleinrichtung liegt, und daß der Hebel einen aus dem einen Beschlagteil vorspringenden Verstellarm aufweist, der zum Eingriff in eine korrespondierende Ausnehmung im anderen Beschlagteil bestimmt ist.

Über die erfindungsgemäß vorgesehene Stelleinrichtung läßt sich die gegenseitige Lage der Bauelemente, in denen die Beschlagteile vormontiert sind, vor dem eigentlichen Zusammenspannen durch den Zuganker schnell und exakt festlegen, ohne daß die Bauelemente selbst besonders ausgebildet sein müssen. Dies ist vor allem bei längeren Stoßstellen günstig, an denen zwei oder mehrere Verbinder angeordnet sind.

Eine exakte Justierung ist gemäß einer bevorzugten Ausführungsform der Erfindung über einen schwenkbaren, zweiarmigen Hebel möglich, der im gegenüberliegenden Beschlagteil eingreift und je nach einstellbarer Schwenklage die gegenseitige Lage der Bauelemente fixiert. Dabei kann ein vom Hebel vollkommen unabhängiger Zuganker, etwa in Form einer Federzunge, vorgesehen sein, die zur Montage zunächst vollständig in einen der Beschlagteile einschiebbar ist. Dieses bietet beim stirnseitigen Verbinden von Platten den Vorteil, daß zuerst nur der Verstellarm des zweiarmigen Hebels in die Ausnehmung des gegenüberliegenden Beschlagteiles eingefädelt werden muß. Erst dann wird die Federzunge vorgeschoben, bis sie eine Nase hintergreift und somit die Platten provisorisch verbindet. Vor dem endgültigen Zusammenziehen der Platten mittels der Federzunge, erfolgt die genaue Höhenjustierung durch Verstellen des zweiarmigen Hebels.

Bei einer weiteren Ausführungsform des erfindungsgemäßen Verbinders ist die Stelleinrichtung um den Zuganker herum angeordnet und besteht insbesondere aus mindestens zwei zusammenwirkenden Stellteilen, von denen das eine in dem einen, das andere in dem anderen der zu verbindenden Bauelemente untergebracht ist. Beispielsweise kann der als Stange ausgebildete Zuganker in einem Bauelement fest angebracht sein und im anderen über eine um ihn herum angeordnete Exzenterverstellung relativ zum zweiten Bauelement verstellbar sein, bevor die eigentliche Verspannung etwa über eine auf den Zuganker aufgeschraubte Mutter erfolgt. Damit können die Bauelemente rationell mit der Stelleinrichtung versehen und rasch zusammengefügt werden. Die Stellteile können in verhältnismäßig weichen Bauelementen und nicht sehr genau gearbeiteten Aussparungen oder Bohrungen untergebracht werden, ohne daß ihre Funktion darunter leidet.

Für eine korrekte Lage und Form der zusammengespannten Bauelemente ist es bei der eben genannten Ausführungs-Form auch günstig, zum Verbinden von Platten, insbesondere Arbeitsplatten von Möbeln, die auf der Unterseite eingefrästen Aussparungen nicht durch offene Nuten, sondern durch miteinander fluchtende Bohrungen zu verbinden, welche den Zuganker und die Stellmittel aufnehmen. Dadurch wird vermieden, daß sich die Arbeitsplatten stellenweise verbiegen.

Bei einer weiteren Ausführungsform des erfindungsgemäßen Verbinders ist günstigerweise vorgesehen, daß der Zuganker und die Stelleinrichtung zum Transport bzw. Lagerung und/oder zum Instellungbringen der beiden Bauelemente vollständig in den bzw. die Beschlagteil(e) einschiebbar bzw. zurückziehbar sind. Dies erlaubt einen einfachen Transport der zu verbindenden Bauelemente (Platten) von der Möbelfabrik zu Zwischenlagern und letztlich zum Montageort, ohne Gefahr zu laufen, daß etwaige über die Stirnseite der Platten vorstehende Beschlagelemente beschädigt werden. Aber auch bei der Montage selbst bietet diese vollständige Einziehmöglichkeit Vorteile, und zwar dann, wenn die Arbeitsplatten auf Grund der Platzverhältnisse nicht senkrecht zur Stirnfläche zusammenschiebbar sind, sondern in Richtung parallel zur Stirnfläche in die Verbindungsstellung gebracht werden müssen. Dies wäre bei vorstehenden Zugankern oder Stelleinrichtungen gar nicht möglich. Dabei ist es günstig, wenn die Stelleinrichtung und der Zuganker kombiniert sind, beispielsweise indem ein Höhenverstellhebel ohne Änderung seiner Höhenlage auch in Zugrichtung bewegbar bzw. spannbar ist und somit auch als Zuganker fungiert. Das Aus- und Einfahren von Zuganker und/oder Stelleinrichtung erfolgt ohne besondere Belastung, dafür ist aber großer Verstellweg nötig. Als Antrieb eignet sich dafür besonders ein vom eigentlichen Spannmechanismus unabhängiger Zahnstangenantrieb.

Der Zuganker kann aber auch einfach entgegen der Wirkung einer Feder einschiebbar sein, wobei er entweder die Verstelleinrichtung trägt oder diese im anderen Beschlagteil (nicht über die Stirnseite vorstehend) untergebracht ist.

Weiters kann gemäß einer bevorzugten Ausführungsform des erfindungsgemäßen Verbinders vorgesehen sein, daß der Verbinder zwei identische Grundbeschläge aufweist, die in den beiden zu verbindenden Bauelementen angeordnet sind, und daß weiters ein vor dem Verbinden der Bauelemente wahlweise in einen dieser Grundbeschläge einsetzbarer Einsatzteil vorgesehen ist, über den sowohl die gegenseite Lage der Bauelemente senkrecht zur Zugrichtung festlegbar, als auch eine Zugkraft in Zugrichtung auf den anderen Grundbeschlag ausübbar ist. Dabei werden die Grundbeschläge, die nicht über die Stirnflächen der zu verbindenden Bauelemente vorstehen (günstig für Transport und Lagerung), bereits in der Möbelfabrik in den Bauelementen (Platten) befestigt. Der Monteur braucht dann am Ort des Zusammenbaus der Platten nur mehr die Einsatzteile einzusetzen. Der große Vorteil besteht dabei darin, daß der Monteur an Ort und Stelle, je nach günstigerer Betätigungsmöglichkeit für Höhenjustierung und Zusammenspannen, frei wählen kann, in welchem der beiden Grundbeschlagteile er den Einsatzteil einsetzt.

Eine andere Möglichkeit, es dem Monteur freizustellen, auf welcher Seite der Stoßstelle der beiden Platten er den Verbinder betätigen will, kann dadurch realisiert werden, daß die beiden Beschlagteile einen identischen Beschlagteiltopf mit symmetrisch zur Zugrichtung abstehenden Befestigungsflanschen aufweisen,die vor dem Verbinden der Bauelemente in vom Möbelhersteller vorgesehene Aussparungen der Bauelemente einsetzbar sind. Dabei werden in der Möbelfabrik nur die Ausnehmungen für die Topfbeschläge vorgesehen. Der Monteur kann dann den aktiven Topfbeschlag, der die Elemente zum Verstellen und zum Spannen des Zugankers trägt, an Ort und Stelle in jener Platte anbringen, zu der er von unten besser zukommt. Den passiven Topfteil (mit Gegenrast o.ä.) montiert er in der anderen Platte.

Eine platzsparende und exakte Justierung, die auch noch Verschiebungen ohne Änderung etwa der eingestellten relativen Höhe der Platten zuläßt, ist günstigerweise dadurch möglich, daß die Stelleinrichtung zur Einstellung der gegenseitigen Lage der Bauelemente eine in einem Beschlagteil drehbar gelagerte Scheibe aufweist, deren Drehachse senkrecht zur Zugrichtung verläuft und die in Richtung dieser Drehachse höhenverstellbar ist, und daß die Stelleinrichtung weiters im anderen Beschlagteil eine Nut bzw. einen Schlitz aufweist, in die bzw. den die Scheibe in Verbindungsstellung mit einem Teil ihres Umfangsbereiches eingreift. Um bei Platten auch eine noch kleine (händisch ausgeführte) Verstellung parallel zu den Stirnkanten zu erlauben, kann vorgesehen sein, daß die Scheibe an einer schwenkbaren, in Richtung der Nut federbelasteten Wippe drehbar und höhenverstellbar gelagert ist, oder daß die Nut quer zur Zugrichtung an der Stirnseite eines beim Verbinden in den einen Beschlagteil reichenden Fortsatzes des anderen Beschlagteiles ausgebildet ist.

Um insbesondere bei mehreren über die Stirnseite verteilten Verbindern eine einfache Demontage zu ermöglichen, kann eine normalerweise automatisch in eine Gegenrast des anderen Beschlagteiles einfallende Klinke des Zugankers (über die in einer bestimmten, ungespannten Stellung befindlichen Spannmittel) in einer Offenstellung gehalten werden.

Weitere Einzelheiten und Vorteile der Erfindung werden in der folgenden Figurenbeschreibung näher erläutert, in der Ausführungsbeispiele des erfindungsgemäßen Verbinders unter Bezuganhme auf die Zeichnungen beschrieben sind.

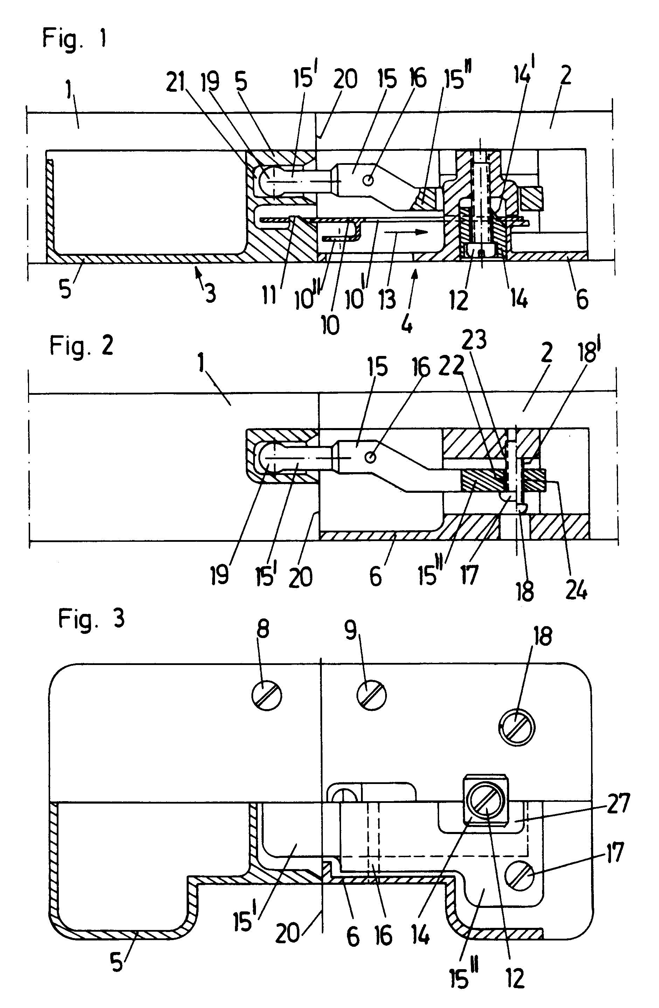

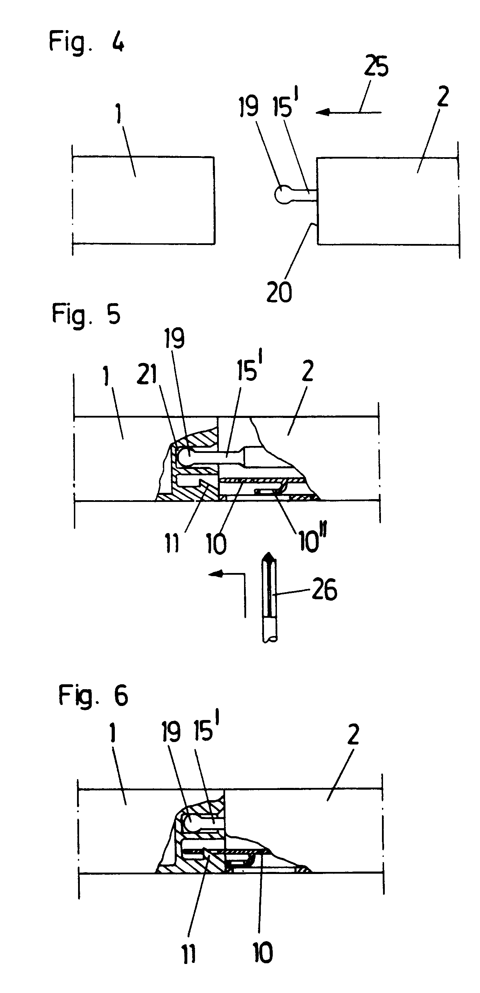

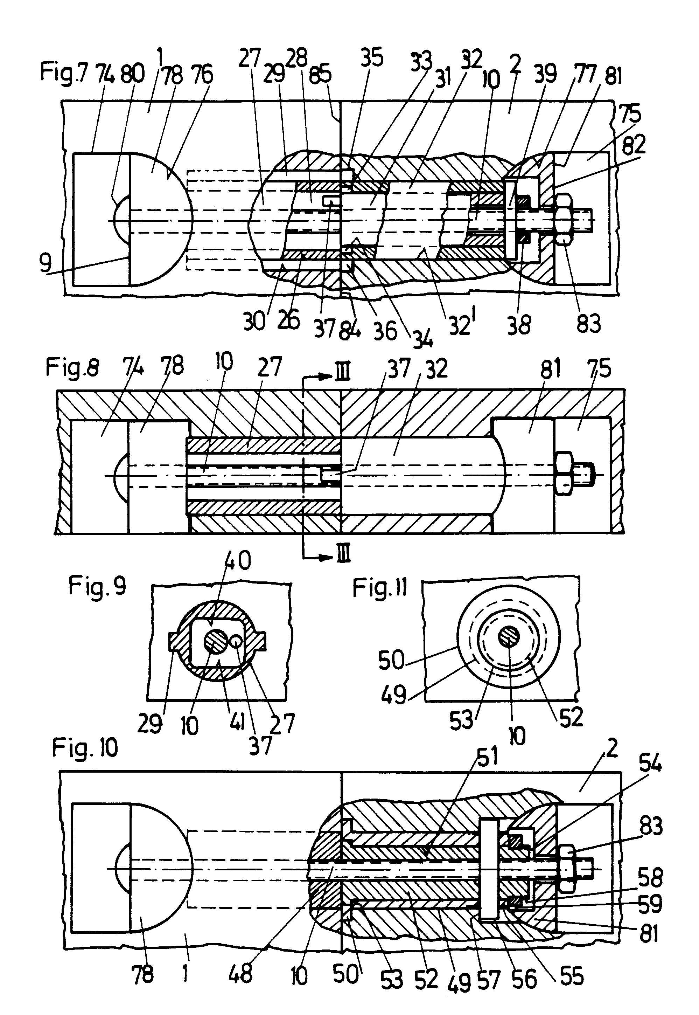

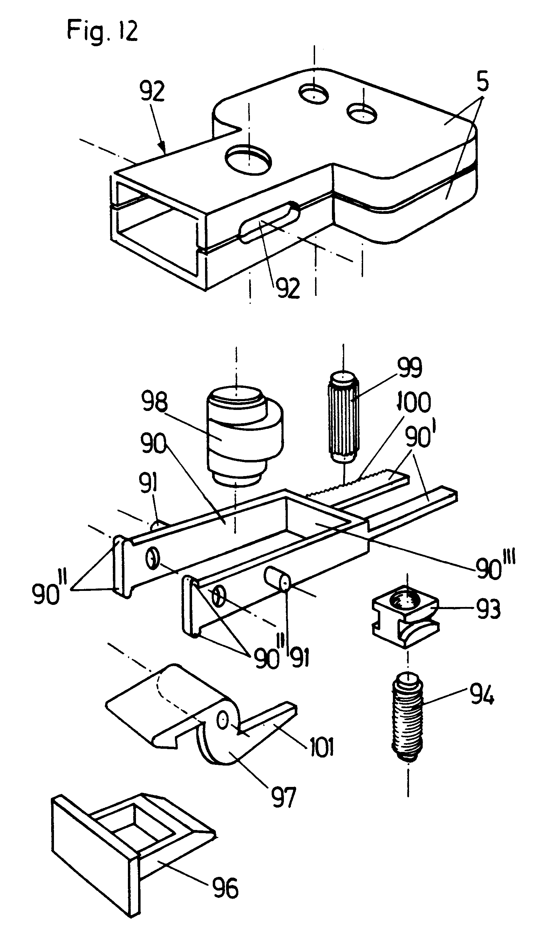

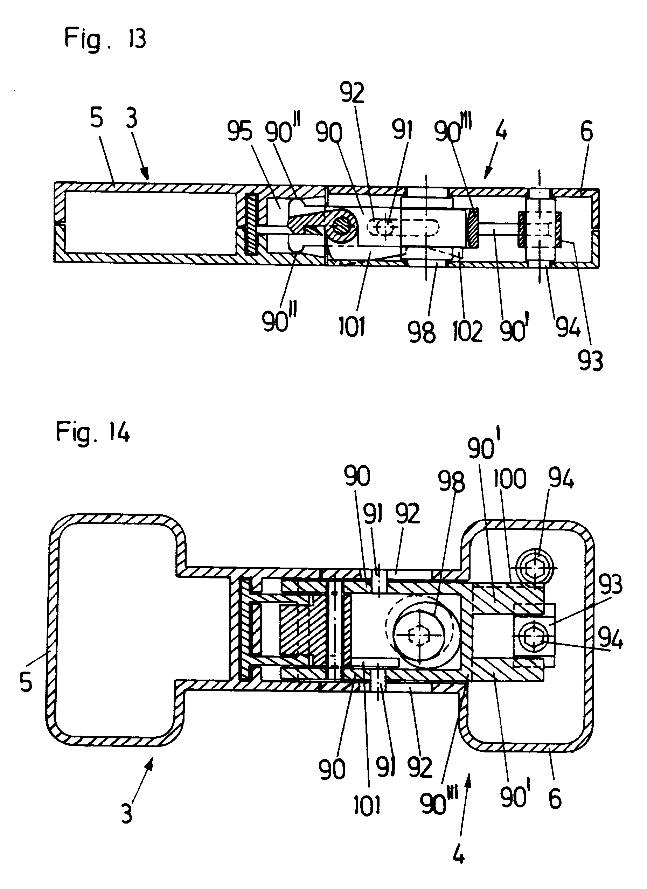

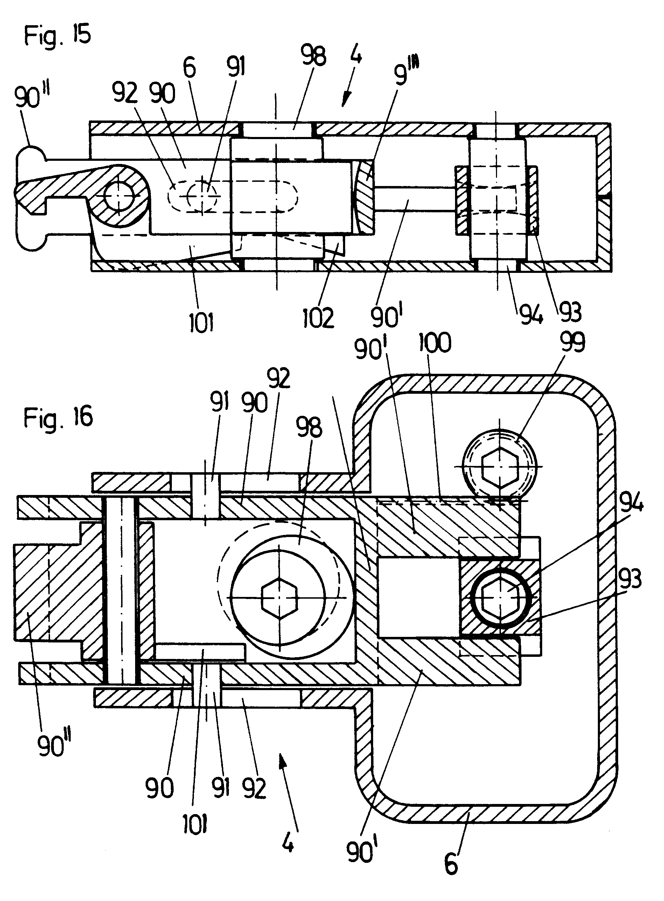

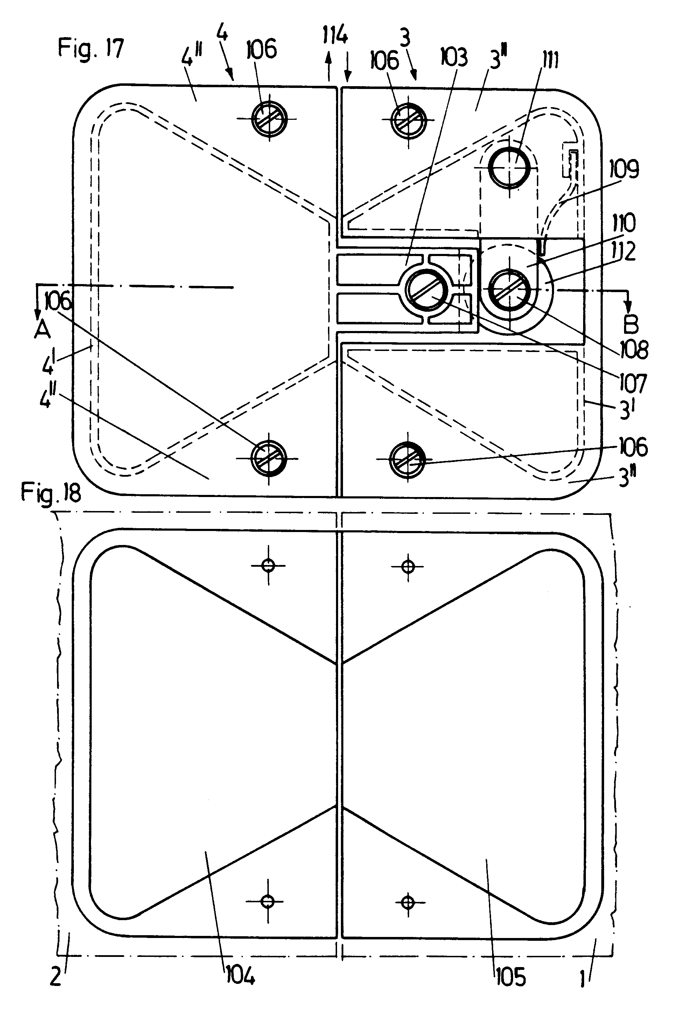

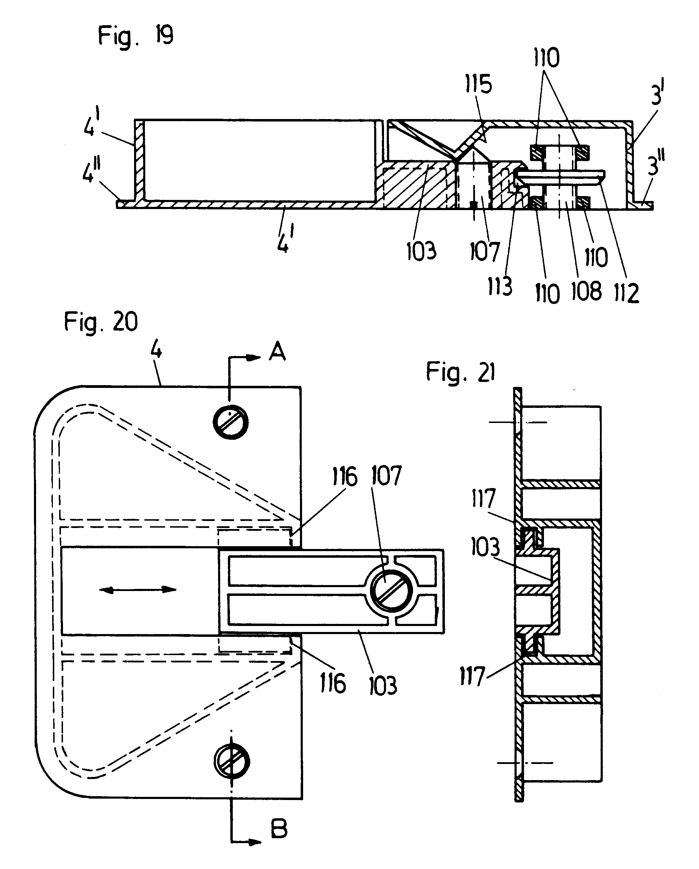

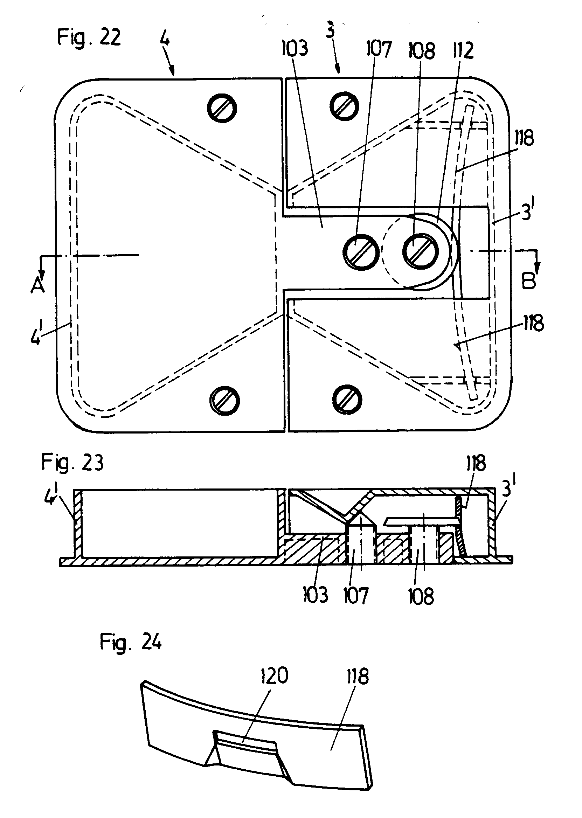

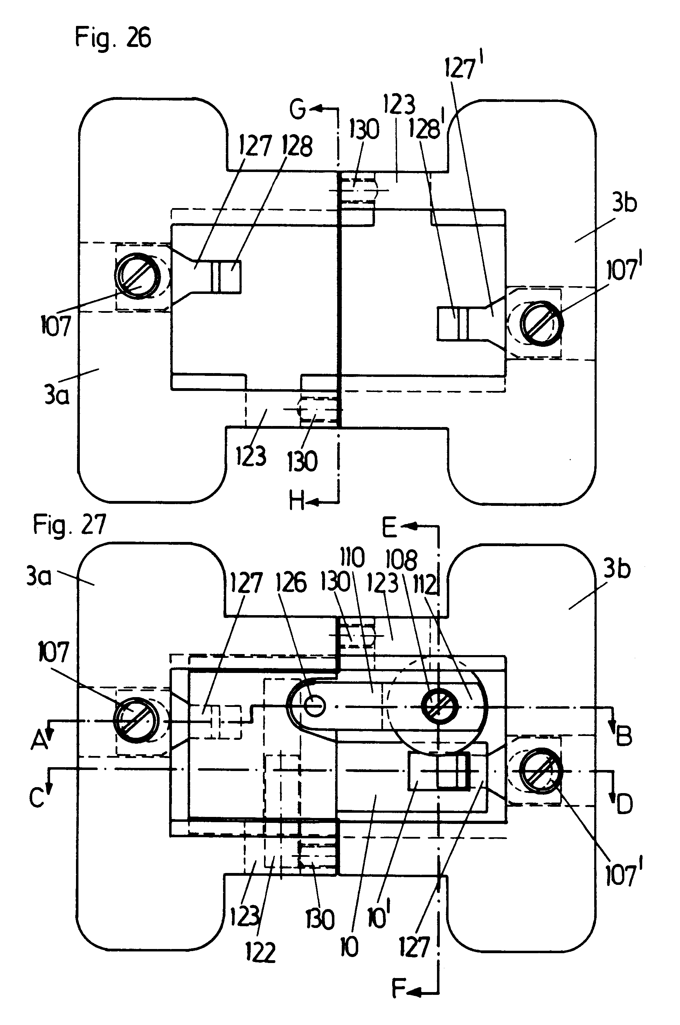

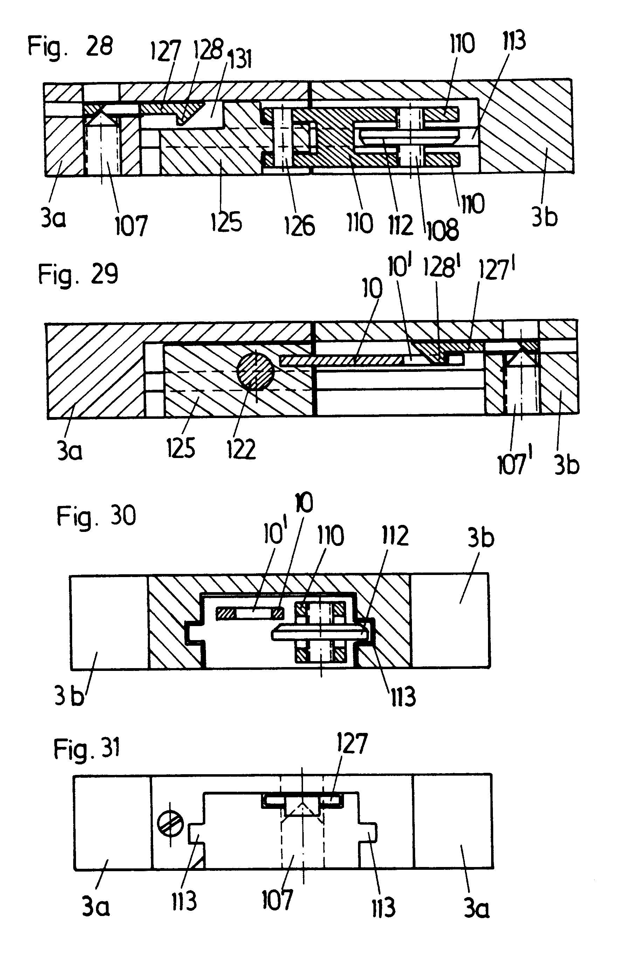

Es zeigen die Fig. 1 einen Vertikalschnitt durch ein erstes Ausführungsbeispiel des erfindungsgemäßen Verbinders zur Verbindung zweier Arbeitsplatten, die Fig. 2 einen dazu parallelen Vertikalschnitt, die Fig 3 eine teilweise horizontal geschnittene Unteransicht des ersten Ausführungsbeispieles, die Fig. 4, 5 und 6 schematisch die ersten Verbindungsphasen zweier Arbeitsplatten mittels des ersten Ausführungsbeispieles des Verbinders in einer teilweise geschnittenen Seitenansicht, die Fig. 7 ein zweites Ausführungsbeispiel von unten gesehen und zum Teil im Schnitt, die Fig 8 das Ausführungsbeispiel von der Längsseite der Platten her gesehen, zum Teil im Schnitt, die Fig. 9 einen Schnitt nach III-III der Fig. 8, die Fig. 10 ein drittes Ausführungsbeispiel von unten gesehen, die Fig. 11 einen Ausschnitt aus der zu verbindenden Stirnseite der in Fig. 10 rechts dargestellten Arbeitsplatte, die Fig. 12 eine perspektivische Explosionsdarstellung der wesentlichen Bestandteile des Funktionsbeschlagteiles und der Haltelasche des Gegenhaltebeschlagteiles eines vierten Ausführungsbeispieles des erfindungsgemäßen Verbinders, die Fig. 13 einen Vertikalschnitt und die Fig. 14 einen Horizontalschnitt durch die in Verbindungsstellung befindlichen Beschlagteile dieses vierten Ausführungsbeispieles, die Fig. 15 einen Vertikalschnitt und die Fig. 16 einen Horizontalschnitt durch den Funktionsbeschlagteil dieses Ausführungsbeispieles, die Fig. 17 eine Unteransicht auf ein fünftes Ausführungsbeispiel des Verbinders, die Fig. 18 die Form der Ausnehmungen in den zu verbindenden Platten für den in Fig. 17 gezeigten Verbinder, die Fig. 19 einen Schnitt gemäß der Linie A-B der Fig. 17, die Fig. 20 eine Variante des linken Beschlagteiles der Fig. 17, die Fig. 21 diese Variante im Schnitt gemäß der Linie A-B der Fig. 20, die Fig. 22 eine Unteransicht auf ein sechstes Ausführungsbeispiel des erfindungsgemäßen Verbinders, die Fig. 23 einen Schnitt gemäß der Linie A-B der Fig. 22, die Fig. 24 eine perspektivische Ansicht des Federblattes der Fig. 22 und 23, die Fig. 25 eine perspektivische Ansicht eines von zwei identisch ausgebildeten Grundbeschlagteilen eines siebten Ausführungsbeispieles des erfindungsgemäßen Verbinders und eines für diesen Grundbeschlagteil bestimmten Einsatzteiles, die Fig. 26 die beiden Grundbeschlagteile dieses siebten Ausführungsbeispieles in Verbindungsstellung ohne eingesetzten Einsatzteil in einer Unteransicht, die Fig. 27 dieselbe Ansicht mit eingesetztem Einsatzteil und die Fig. 28 bis 31 Schnitte gemäß den Linien A-B, C-D, E-F und G-H der Fig. 26 und 27.

Der in den Fig. 1 bis 3 dargestellte Verbinder zur festen und exakten Verbindung der beiden Arbeitsplatten 1 und 2 besteht aus zwei allgemein mit 3 bzw. 4 bezeichneten Beschlagteilen, die jeweils ein in eine in den Arbeitsplatten 1, 2 eingefräste Aussparung eingesetztes Gehäuse 5, 6 aufweisen, das mittels Gehäusebefestigungsschrauben 8, 9 mit der jeweiligen Arbeitsplatte 1 bzw. 2 fest verbunden ist.

Der Beschlagteil 4 weist einen als Federzunge 10 ausgebildeten Zuganker auf, die bei den in den Fig. 1 bis 3 gezeigten zusammengeschobenen Arbeitsplatten 1, 2 eine Nase 11 im anderen Beschlagteil 3 hintergreift und die durch Spannmittel über die Beschlagteile 3 und 4 eine die Arbeitsplatten 1 und 2 verbindende Zugkraft ausübt. Die Spannmittel bestehen beim vorliegenden Ausführungsbeispiel einfach aus einem über die Schraube 12 senkrecht zur Zugrichtung (Pfeil 13) verstellbaren Spannkörper 14, der beim Hineinschrauben der Schraube 12 über die schräge Fläche 14ʹ, die am Ende eines Langloches 10ʹ der Federzunge 10 angreift, die Federzunge 10 in Zugrichtung 13 verschiebt und damit über die Nase 11 eine Zugkraft auf die Arbeitsplatte 1 ausübt.

Unabhängig vom Zuganker (Federzunge 10) bzw. dessen Spannmitteln (Schraube 12, Spannkörper 14) ist eine Stelleinrichtung zur feinfühligen Einstellung der gegenseitigen Lage (im vorliegenden Fall der Höhe) der Arbeitsplatten 1 und 2 senkrecht zur Zugrichtung 13 des Zugankers vorgesehen.

Beim ersten Ausführungsbeispiel besteht diese Stelleinrichtung im wesentlichen aus dem zweiarmigen Hebel 15, der um eine senkrecht zur Zugrichtung 13 der Federzunge 10 und senkrecht zur vertikalen Verstellrichtung liegende horizontale Achse 16 im Gehäuse 6 schwenkbar gelagert ist und der auf noch näher beschriebene Weise mittels der Stellschrauben 17 und 18 (Fig. 2) in seiner Schwenklage einstellbar ist. Der über die Verbindungsfläche 20 der Arbeitsplatte 2 vorspringende Verstellarm 15ʹ greift in die korrespondierende Ausnehmung 21 im Beschlagteil 3 der anderen Arbeitsplatte 1 ein. Die Verdickung 19, deren Dicke gleich der lichten Höhe der Ausnehmung 21 ist, dient dazu, den Verstellarm 15ʹ gegenüber der Ausnehmung 21 verschwenken zu können und dabei kein Spiel in vertikaler Richtung vorsehen zu müssen.

Der Hebel 15 ist im wesentlichen plattenförmig ausgebildet und nimmt einen Großteil der Beschlagteilbreite ein (vgl. Fig. 3). Damit können punktförmige Belastungen in der Ausnehmung 21 vermieden werden und außerdem bestehen bei einem solchen breiten Hebel 15 günstigere Angriffsmoglichkeiten für die Einstellvorrichtung, die im gezeigten Beispiel aus den zwei parallelen, durch den Arm 15ʺ des Hebels 15 geführten Schrauben 17, 18 besteht. Die eine Schraube 17 ist durch die Bohrung 22 im Hebel 15 geführt und in eine Gewinde 23 des Beschlagteiles 4 einschraubbar. (Die linke Hälfte dieser Schraube 17 ist in Fig. 2 im Schnitt dargestellt). Mit dem Schraubenkopf verschwenkt sie dabei den Hebel 15 im Uhrzeigersinn und die Arbeitsplatte 1 senkt sich (bei noch ungespannter Federzunge) gegenüber der Arbeitsplatte 2. Die andere Schraube 18 ist durch ein Gewinde 24 im Arm 15ʺ des Hebels 15 geführt und stützt sich mit ihrem Schaft 18ʹ oben am Beschlagteil 4 ab. Durch Eindrehen dieser Schraube 18, deren rechte Hälfte in Fig. 2 im Schnitt dargestellt ist, in das Gewinde 24 wird der Hebel 15 im Uhrzeigersinn verschwenkt bzw. die Arbeitsplatte 1 gegenüber der Arbeitsplatte 2 gehoben. Die beiden Stellschrauben 17 und 18 erlauben ein feinfühliges und exaktes Justieren der beiden Arbeitsplatten, bevor diese über die Federzunge fest miteinander verspannt werden.

In den Fig. 1 bis 3 sind die Arbeitsplatten 1 und 2 in der bereits exakt justierten Verbindungsstellung gezeigt. Die ersten Phasen der Arbeitsplattenverbindung sind in den Fig. 4 bis 6 schematisch dargestellt.

Gemäß Fig. 4 werden die beiden Arbeitsplatten 1 und 2, die je einen erfindungsgemäßen Beschlagteil eingesetzt haben, in Richtung des Pfeiles 25 aufeinander zubewegt. Dabei schaut nur der Verstellarm 15ʹ über die Verbindungsfläche 20 vor. Die Federzunge 10 ist vollständig in den Beschlagteil 4 eingezogen, wobei der Spannkörper 14 und die Schraube 12 am vorderen Ende des Langloches 10ʹ der Federzunge 10 liegen. Die Tatsache, daß nur der Verstellarm 15ʹ vorschaut, bietet den Vorteil, daß man zunächst einzig und allein diesen Verstellarm 15ʹ in die Ausnehmung 21 der anderen Arbeitsplatte 1 einfädeln muß. Dies ist vor allem bei langen Stoßstellen mit mehreren Verbindern und bei schweren Bauelementen von Vorteil. In Fig. 5 sind die beiden Arbeitsplatten 1 und 2 der Höhe nach bereits justiert gezeigt. Im allgemeinen wird man jedoch vor der Höhenjustierung (über den Hebel 15) die Federzunge 10 über ein dafür vorgesehenes Betätigungsorgan 10˝ beispielsweise mittels eines Schraubenziehers 26 in Fig. 5 nach links schieben, bis die Nase 11 in eine Öffnung der Federzunge 10 eindringt und so die Federzunge 10 diese Nase 11 hintergreift. Damit ist eine provisorische Verbindung der Arbeitsplatten 1 und 2 gegeben. Nach erfolgter Höheneinstellung über die Stellschrauben 17 und 18 und den Hebel 15 werden die Arbeitsplatten 1 und 2 über den Spannkörper 14 und die Federzunge 10 endgültig fest miteinander verbunden.

Beim gezeigten ersten Ausführungsbeispiel sind die Spannmittel 12, 14 für den Zuganker 10 und die wesentlichen Elemente 15, 16, 17 und 18 der Stelleinrichtung zur Einstellung der gegenseitigen Lage der Arbeitsplatten in ein und demselben Beschlagteil 4 untergebracht, wobei der plattenförmige Hebel 15 eine die Spannmittel 12, 14, 14ʹ aufnehmende Aussparung 27 aufweist.

Damit brauchen im anderen Beschlagteil 3 nur mehr "passive" Elemente, wie die Nase 11 und die Ausnehmung 21, vorgesehen sein. Natürlich ist es grundsätzlich auch möglich, in einem Beschlagteil die Stelleinrichtung und im anderen Beschlagteil die Spannmittel für den Zuganker unterzubringen.

Bei dem zweiten Ausführungsbeispiel nach Fig. 7 bis 9 sind zwei Arbeitsplatten 1,2 mit Hilfe eines Zugankers 10 zusammengespannt. Dazu ist auf der Unterseite jeder Platte eine Aussparung 74,75 ausgefräst. Jede Aussparung ist auf ihrer der anderen Platte zugewandten Seite mit einer runden Endfläche 76,77 versehen. Gegen die Endfläche 76 der Aussparung 74 legt sich ein Widerlager 78, auf dessen Anlagefläche 79 sich der Kopf 80 des Zugankers 10 abstützt. Gegen die Endfläche 77 der anderen Platte 2 legt sich ein Widerlager 81, auf dessen Anlagefläche 82 sich eine Mutter 83 abstützt. Sie ist so auf das Ende des Zugankers 10 geschraubt, daß dadurch die Kraft entsteht, welche die Arbeitsplatten 1 und 2 mit ihren Stirnseiten 84,85 unverrückbar zusammenspannt.

In der links dargestellten Arbeitsplatte 1 liegt in einer Bohrung 26, welche die Aussparung 74 mit der Stirnseite 84 verbindet, eine als Stellteil dienende Hülse 27. Sie hat eine axiale Höhlung 28 mit im wesentlichen rechteckigem Querschnitt, welche den Zuganker 10 mit Abstand umgibt. Gegen Verdrehen ist die Hülse 27 mit Hilfe von Leisten 29 gesichert, die in entsprechende Nuten 30 der Platte 1 greifen.

In der rechts dargestellten Arbeitsplatte 2 liegt eine Hülse 31, welche den Zuganker 10 mit Spiel umgibt. Sie ist in einer Buchse 32 drehbar geführt, die in einer Bohrung 32ʹ der Platte 2 liegt. Die Buchse 32 ist gegen Längsverschiebung durch einen Bund 33 gesichert, der in eine entsprechende Ausdrehung 34 der Buchse 32 greift. Die Buchse 32 ist ihrerseits gegen Verdrehen und Verschieben durch Nasen 35 gesichert, die in entsprechende Ausnehmungen 36 der Arbeitsplatte 2 greifen.

An der Stirnseite der Hülse 31 ist ein Vorsprung 37 angebracht, der bei aneinanderliegenden Arbeitsplatten 1,2 in die Höhlung 28 greift. Das von der Platte 1 abgewandte Ende der Hülse 31 trägt ein Gewinde 38, auf welches eine Ringmitter 39 aufgeschraubt ist.

Beim Zusammensetzen der Arbeitsplatten 1,2 befinden sich die als Stellmittel dienenden Teile - Hülse 27 und Hülse 31 - in der in Fig. 3 dargestellten Lage. Die Mutter 83 und das Widerlager 81 sind noch nicht eingesetzt. Die Ringmutter 39 ist nur lose aufgeschraubt. Wenn nun die Arbeitsplatten 1,2 auf ihrer Oberseite nicht genau fluchten, wird die Hülse 31 in der richtigen Richtung verdreht. Der Vorsprung 37 legt sich dabei gegen eine waagrechte Wand 40, 41 der Höhlung 28 und verschiebt die Hülse 27 und damit die Arbeitsplatte 1 wie gewünscht nach oben oder unten, bis die Arbeitsplatten die richtige gegenseitige Lage haben.

Es handelt sich um kleinere Verschiebungen bis zu 1 oder 2 mm. Ist diese Lage erreicht, wird die Ringmutter 39 angezogen. Damit ist die gegenseitige Lage der Arbeitsplatten bestimmt. Daraufhin wird das Widerlager 81 eingesetzt und die Mutter 83 aufgeschraubt und angezogen. Beide Arbeitsplatten sind damit durch Anpressen unverrückbar gegeneinander festgehalten. So läßt sich rasch und sicher die Verbindung herstellen, besonders auch wenn die Stirnseiten 84,85 recht lang sind, so daß zu ihrer Fixierung mehrere Zuganker und entsprechende Stellmittel vorzusehen sind.

Beim dritten Ausführungsbeispiel nach den Fig. 10 und 11 ist wieder ein Zuganker 10 vorgesehen, der Arbeitsplatten 1 und 2 zusammenspannt. Auf gleiche Weise wie beim zweiten Ausführungsbeispiel wird er mit Hilfe einer Mutter 83 zwischen Widerlager 78,81 gespannt.

In der Arbeitsplatte 11 liegt passend eine Hülse 48, in welcher der Zuganker 10 passend verläuft. In der Arbeitsplatte 2 ist passend,aber drehbar eine Buchse 49 eingesetzt, die mit einem Bund 50 gegen Verschiebung gesichert ist. In einer exzentrischen Bohrung 51 dieser Buchse ist eine Hülse 52 passend und drehbar geführt. Sie greift mit einem Bund 53 in eine Ausdrehung der Buchse 49 und nimmt mit einer exzentrischen Bohrung 54 den Zuganker 10 passend auf.

Das von der anderen Arbeitsplatte 1 abgewandte Ende der Buchse 49 hat ein Gewinde 55, auf das eine Ringmutter 56 geschraubt ist. Diese greift in eine Aussparung 57 der Arbeitsplatte 2. Das entsprechende Ende der Hülse 52 trägt auf einem Gewinde 58 eine zweite Ringmutter 59, die sich gegen die Stirnseite der Buchse 49 legt.

Entsprechend dem Ausführungsbeispiel nach Fig. 7 werden vor dem Anziehen der Mutter 83 die beiden Arbeitsplatten 1,2 der Höhe nach gegeneinander ausgerichtet. Dazu werden die Buchse 49 und die Hülse 52 in entgegengesetztem Sinn so verdreht, daß die Arbeitsplatte 2 gegenüber dem Zuganker 10 höher oder tiefer gestellt wird, je nachdem die beiden exzentrischen Bohrungen 51 und 54 zueinander stehen. Bei Bedarf kann auf diese Weise auch die seitliche Lage der Arbeitsplatten eingestellt werden.

Ist die richtige Einstellung gefunden, wird durch Anziehen der Ringmutter 56 die Buchse 49 in der Arbeitsplatte 2 und durch Anziehen der Ringmutter 59 die Hülse 52 in der Buchse 49 festgelegt. Dadurch ist die gegenseitige Lage der Platten bestimmt. Nach Aufsetzen des Widerlagers 81 und Anziehen der Mutter 83 werden die Arbeitsplatten endgültig zueinander fixiert.

Die Widerlager für das Spannen des Zugankers können statt aus den gezeigten, vorwiegend aus Kunststoff hergestellten Formstücken auch zum Beispiel aus Blechstreifen bestehen, die an die Endflächen 76,77 angelegt werden, oder eine andere die Auflagefläche vergrößernde Form haben.

Beim Verbinden härterer, zum Beispiel aus Metall bestehender Bauteile können die Widerlager 78,81 des zweiten und dritten Ausführungsbeispieles weggelassen werden, ebenso die Hülse 48 des dritten Ausführungsbeispieles.

Die Aussparungen 74,75 können auch größer sein, um das Einführen und Spannen der Stellmittel und Spannmittel zu erleichtern. Weiters sind gewöhnlich die Ausmaße der Arbeitsplatten im Vergleich zum Durchmesser der Stellmittel der Fig. 7 bis 11 größer.

Das in den Figuren 12 bis 16 dargestellte vierte Ausführungsbeispiel des Verbinders besteht aus einem aktiven Beschlagteil 3 (Fig. 12,15,16) und einem passiven Beschlagteil 4 (links in den Fig. 13 und 14), wobei beide Beschlagteile 3,4 ein zweiteiliges, mit gleichen äußeren Abmessungen versehenes Gehäuse 5 bzw. 6 aufweisen, das in hier nicht näher dargestellten, zu verbindenden Bauelementen jeweils im stirnseitigen Bereich befestigt wird. Solche zweiteiligen, geschlossenen Gehäuse 5,6 sind beispielsweise aus dauerhaft formstabilem Zinkdruckguß einfach herzustellen und erlauben eine geschützte Unterbringung der wesentlichen Funktionsbestandteile des Verbinders.

Beim vorliegenden vierten Ausführungsbeispiel übernimmt der gabelförmig (vgl. insbesondere Fig. 12) ausgebildete, zweiarmige Hebel 90 (Verbindungsteil) im wesentlichen die Funktion der Höhenjustierung senkrecht zur Zugrichtung und die Funktion des die Zugkraft übertragenden Zugankers selbst. Damit braucht beim Verbinden nur eine gemeinsame Bauteilgruppe (90,97) in den gegenüberliegenden Beschlagteil 3 eingeführt werden, was die Handhabung erleichtert. Zum Transport kann diese Bauteilgruppe (90,97) als Einheit in den aktiven Beschlagteil 4 vollständig zurückgezogen werden, was später noch näher erläutert werden wird.

Zur Ausübung der Höhenverstellfunktion ist der Hebel 90 um zwei Achszapfen 91, die in Langlöchern 92 des Gehäuses 6 geführt sind, verschwenkbar. Ein Nutenstein 93, in dem zwei Leisten 90ʹ des Hebels 90 in Zugrichtung gleiten können und der über eine Schraube 94 höhenverstellbar ist, läßt sich die Schwenklage des Hebels 90 einstellen. Der Hebel 90 ist an seinem Ende 90ʺ leicht bombiert, wobei die Dicke der Bombierungen der lichten Weite der Ausnehmung 95 des anderen Beschlagteiles entspricht. Diese vorteilhaft Ausbildung stellt ein sattes Anliegen des Hebels 90 in der Ausnehmung 95 sicher, wobei ein Verschwenken um die Achsen 91 problemlos möglich ist.

Wie bereits erwähnt, übernimmt der Hebel 90 auch die Zugankerfunktion, was durch die Führung in den Langlöchern 92 und im Nutenstein 93 ohne Änderung der Höheneinstellung möglich ist. Zur Zugkraftübertragung auf den anderen Beschlagteil 3 weist der Hebel 90 in seinem vorderen Endbereich eine schwenkbare Klinke 97 auf, die beim Zusammenschieben der Bauteile automatisch in eine Gegenrast (Haltelasche 96) des anderen Beschlagteiles 3 einfällt. Eine stehende Exzenternocke 98 liegt am Gabelsteg 90‴ des gabelförmig ausgebildeten Hebels 90 an und zieht bei entsprechender Verdrehung über den Hebel 90 und die Klinke 97 die Haltelasche 96 her, womit die Bauelemente fest miteinander verbunden werden können. Wie aus Fig. 15 zu sehen ist, ist der Gabelsteg 90‴ leicht bombiert ausgebildet. Damit kann die Exzenternocke 98 unabhängig von der Schwenkstellung des Hebels 90 immer problemlos am Gabelsteg 90‴ anliegen.

Weiters ist ein Zahnstangenantrieb (Ritzel 99, Zahnreihe 100) vorgesehen, über den der Hebel 90 samt Klinke 97 im unbelasteten Zustand rasch und vollständig in das Gehäuse 6 des Beschlagteiles 4 zurück ziehbar bzw. wieder ausfahrbar ist. Bei zurückgezogenem Hebel 90 stehen keine Teile über die Stirnseite der Bauelemente (Platten) vor, die beim Transport oder der Lagerung beschädigt werden könnten. Außerdem ist ein Instellungbringen der zu verbindenden Bauelemente auch parallel zur Stirnfläche möglich (z.B. Einsetzen einer Arbeitsplatte oder eines Fensterbrettes von oben). Zum Verbinden wird also zunächst der Hebel 90 samt Klinke 97 über den Zahnstangenantrieb (99,100) ausgefahren, bis die Klinke 97 in die Haltelasche 96 einklinkt. Über die Schraube 94 erfolgt die exakte Justierung der Bauelemente (z.B Höhenjustierung von Arbeitsplatten), worauf die Bauelemente über die Exzenternocke 98 zusammengezogen werden. Die Betätigung des Ritzels 99, der Höhenverstellung 94 und des Exzenters 98 erfolgt beispielsweise mittels eines Schraubenziehers oder Inbus-Schlüssels durch Öffnungen im Gehäuse 6 des aktiven Beschlagteiles 4.

Um ein einfaches Lösen des in Fig. 12 bis 16 gezeigten Verbinders zu ermöglichen (insbesondere bei mehreren Verbindern entlang einer Stoßstelle), weist die Klinke 97 einen Fortsatz 101 auf, über den die in einer vom Gabelsteg 90‴ weggedrehten Stellung befindliche Exzenternocke 98 mit der an ihr unten ausgebildeten Keilfläche 102 die Klinke 97 offenhält. Zum Auseinanderbauen zweier Bauelemente brauchen also nur die Exzenternocken 98 der Verbinder entsprechend verstellt werden und die Bauelemente auseinandergezogen werden.

Das in den Figuren 17 bis 19 dargestellte fünfte Ausführungsbeispiel weist zwei in ihren Außenabmessungen identische Beschlagteiltöpfe 3ʹ,4ʹ mit symmetrisch zur Zugrichtung abstehenden Befestigungsflanschen 3ʺ,4ʺ auf. Bei diesem Ausführungsbeispiel ist daran gedacht, daß der Möbelhersteller in den Bauelementen, etwa in den Arbeitsplatten 1 und 2, Ausfräsungen 104 bzw. 105 für die Beschlagteile 3 bzw. 4 vorsieht (vgl. Fig. 18), die Beschlagteile selbst aber noch nicht einsetzt. Dies wird dem Monteur überlassen, der an Ort und Stelle wählen kann, welchen Beschlagteil 3 bzw. 4 er in welche Aussparung 104 bzw. 105 einsetzt und mittels der Schrauben 105 mit den entsprechenden Bauelementen verschraubt, bevor er die Bauelemente 1,2 zusammenfügt. Der Monteur wird dabei seine Wahl so treffen, daß er mit dem Schraubenzieher zur Betätigung der im folgenden noch beschriebenen Spannschraube 107 und der Höhenverstellschraube 108 besser zukommt.

Der starre Fortsatz 103 des in den Figuren 17 bis 19 linken Beschlagteiles 4 ist für die Zugankerfunktion und die Höhenverstellfunktion (Justierung der gegenseitigen Lage der zu verbindenden Arbeitsplatten) entscheidend.

Zur Höhenverstellung weist die federbelastete (Feder 109) Wippe 110, die um die vertikale Achse 111 verschwenkbar im Beschlagteil 3 gelagert ist, eine über die Schraube 108 höhenverstellbare Scheibe 112 auf. Diese Scheibe 112 greift in eine Nut 113 des Fortsatzes 103 des anderen Beschlagteiles 4 ein und hebt diesen relativ zum Beschlagteil 3 auf und ab. Die Höhenverstellung über die Scheibe 112 und die quer zur Zugrichtung verlaufende Nut 113 ist sehr kompakt und erlaubt außerdem ein (händisches) Nachjustieren der beiden zu verbindenden Arbeitsplatten in Richtung der Pfeile 114, wobei die Scheibe 112 in der Nut 113 abrollt bzw. gleitet. Die Lagerung der Scheibe 112 auf der federbelasteten Wippe 110 ist beim Einführen des Fortsatzes 103 in den Beschlagteil 3 zweckmäßig. Stimmt nämlich die Höhe der Scheibe 112 und der Nut 113 vorerst nicht zusammen, so weicht die Wippe 110 zunächst nach hinten aus. Durch Zurechtrücken der Arbeitsplatten bzw. Verstellen der Scheibe 112 über die Schraube 108, schnappt dann die Scheibe 112 unter Federwirkung in die Nut 113 ein. Um dieses Einschnappen zu erleichtern, ist die Scheibe 112 leicht abgeschrägt.

Zum Verspannen der beiden Arbeitsplatten 1,2 dient die vorne kegelförmig ausgebildete Spannschraube 107 des Fortsatzes 103, die sich an der Schrägfläche 115 des Beschlagteiles 3 abstützt und so eine Kraft in Zugrichtung ausübt. Beim Hereinziehen des Fortsatzes 103 in den Beschlagteil 3 weicht die Scheibe 112 über die Wippe 110 nach hinten aus.

Bei der in Fig. 20 und 21 gezeigten Variante des obigen fünften Ausführungsbeispieles ist der Fortsatz 103 nicht starr mit dem Beschlagteil 4 verbunden, sondern in einer Nut-Feder-Führung 117 in Zugrichtung verschiebbar gelagert, wobei ein Anschlag 116 den Verschiebeweg begrenzt. Der Fortsatz ist somit zur Montage und allenfalls auch zum Transport in den Beschlagteil 4 einschiebbar. Er kann in Richtung ausgefahrene Stellung federbelastet sein, womit er von selbst in diese ausgefahrene Stellung fährt.

Das in den Figuren 22 bis 24 dargestellte sechste Ausführungsbeispiel ist ähnlich aufgebaut wie das eben beschriebene fünfte Ausführungsbeispiel. Lediglich die Höhenverstellung ist anders ausgeführt. Gemäß den Fig. 22 bis 24 trägt der Fortsatz 103 an seiner Stirnseite die höhenverstellbare Scheibe 112, die in den Schlitz 120 des in Zugrichtung nachgebenden Federblattes 118 eingreift. Auch bei diesem sechsten Ausführungsbeispiel könnte der Fortsatz 103 ähnlich wie in den Figuren 20 und 21 in den Beschlagteil 4 zurückziehbar sein.

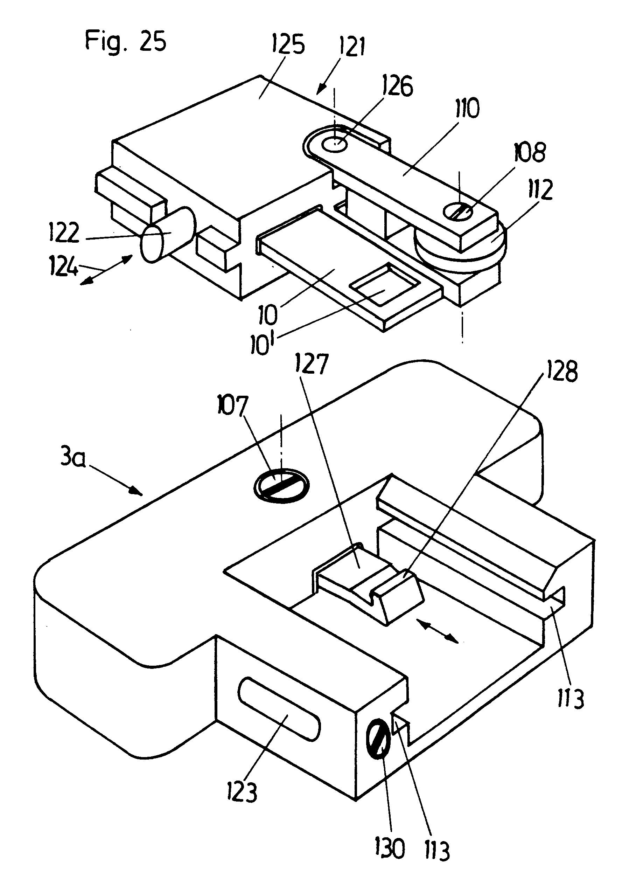

Bei dem in den Figuren 25 bis 31 dargestellten siebten Ausführungsbeispiel des erfindungsgemäßen Verbinders besteht die Grundidee darin, zwei gleiche Grundbeschläge 3a,3b vorzusehen, die vom Möbelhersteller bereits fix in die zu verbindenden Bauelemente (z.B. Arbeitsplatten) eingesetzt werden, wobei diese Grundbeschläge günstigerweise nirgends aus den Bauelementen vorstehen. Weiters ist ein Einsatzteil 121 vorgesehen, der vom Monteur, der die Bauelemente zusammenfügt, an Ort und Stelle wahlweise in einen der beiden Grundbeschläge 3a oder 3b eingesetzt wird und der dann die Höhenverstell- und die Zugankerfunktion übernimmt. In welchen der beiden Grundbeschläge 3a oder 3b der Monteur den Einsatzteil 121 vor dem Zusammenfügen der Bauelemente einsetzt, wird davon abhängen, wie er gemäß den örtlichen Gegebenheiten besser zur Höhenverstellschraube 108 und zu einer Spannschraube 107 bzw. 107ʹ zukommt.

Der Grundteil 3a und der Einsatzteil 121 sind in Fig. 25 perspektivisch dargestellt. Der Grundteil 3a weist zur Aufnahme des Einsatzteiles 121 zwei in Zugrichtung verlaufende Nuten 13 auf. Diese Nut-Feder-Verbindung ist zur spielfreien Übertragung der quer zur Zugrichtung verlaufenden Höhenverstellkräfte gut geeignet. Damit der Einsatzteil in Nutrichtung verlaufende Zugkräfte auf den Grundbeschlag 3a übertragen kann, weist er einen zum Einschieben des Einsatzteiles 121 in den Grundbeschlag 3a zunächst eindrückbaren Federbolzen 122 auf, der dann in das Langloch 123 springt und den Verschiebeweg begrenzt. (Der Federbolzen ist in Richtung der Pfeile 124 beweglich.)

Der Einsatzteil besteht aus einem Körper 125, aus dem der Zuganker 10 und eine drehbar gelagerte (Schwenkachse 126), federbelastete Wippe 110 mit einer Höhenverstellscheibe 112 samt Höhenverstellschraube 108 vorstehen. Der Zuganker besteht aus einer elastischen Federzunge 10, die am Ende eine Aufnahmeöffnung 10ʹ für den im folgenden beschriebenen Spannhaken 127 bzw. 127ʹ aufweist.

Jeder Grundbeschlagteil 3a bzw. 3b weist einen in Zugrichtung über die Spannschrauben 7 bzw. 7ʹ verstellbaren Spannhaken 127 bzw. 127ʹ auf. Vorne weist dieser Spannhaken eine Nase 128 bzw. 128ʹ auf, die geeignet ist, in die Aufnahmeöffnung 10ʹ des Zugankers 10 einzudringen (vgl insbesondere Fig. 29) und damit den Zuganker 10 herzuziehen. Durch Hineindrehen der entsprechenden Spannschraube 107 bzw. 107ʹ wird der Spannhaken 127 bzw. 127ʹ zurückgezogen.

Zum Verbinden der beiden Bauelemente,in die, wie in Fig. 26 dargestellt, die beiden Grundbeschlagteile 3a,3b (ohne Einsatzteil 121) bereits fix eingesetzt sind, wird zunächst der Einsatzteil von der Stirnseite in einen der Grundbeschlagteile (hier 3a) eingesetzt. Über die Anschlagschraube 130, die in das Langloch 123 reicht, kann die Lage des Einsatzteiles 121 relativ zum Grundbeschlagteil 3a festgelegt werden, wobei der Federbolzen 122 beim folgenden Zusammenspannen der Bauelemente an dieser Anschlagschraube 130 anliegt (Fig. 27). Diese Einstellmöglichkeit des Einsatzteiles 121 ist günstig, wenn die Stirnseiten der Arbeitsplatten (etwa wegen schiefer Raumverhältnisse) nachgearbeitet werden müssen, insbesondere im Hinblick darauf, daß die Spannhaken 127 bzw. 127ʹ meist nur einen relativ geringen Spannhub ausführen. Zu erwähnen ist noch, daß die Lage des Einsatzteiles 121 im Grundbeschlagteil 3a im wesentlichen über die Anschlagschraube 130 und den Federbolzen 122, nicht aber über den Spannhaken 127 festgelegt ist. Dieser liegt inaktiv in einer Ausnehmung 131 des Körpers 125 des Einsatzteiles 121 (Fig. 28).

Beim stirnseitigen Zusammenführen der zu verbindenden Bauelemente, bei dem die Federzunge 10 und die Wippe 110 in den gegenüberliegenden Grundbeschlagteil 3b eingeführt werden, schnappt die Federzunge 10 über die Nase 128ʹ des Spannhakens 127ʹ des Grundbeschlagteiles 3b (Fig. 29) und die Scheibe 112 dringt entsprechend der zur Nut 113 weisenden Federbelastung der Wippe 110 in diese Nut 113 ein (Fig. 30). Die Nut 113, in die die Scheibe 121 eingreift, entspricht genau der dem Langloch 123 gegenüberliegenden Nut im anderen Grundbeschlagteil 3a, in der der Einsatzteil 121 geführt ist. Die Höhenverstellung erfolgt über die Schraube 108 und die höhenverstellbare Scheibe 112. Nach exakter Justierung der beiden Bauelemente werden sie durch Betätigung der Spannschraube 107ʹ über den Spannhaken 127ʹ und den Zuganker 10 fest zusammengezogen.

Der erfindungsgemäße Verbinder eignet sich nicht nur für Platten, sondern auch zur Verbindung anderer Bauelemente, bei denen es auf eine genaue gegenseitige Lage der Bauelemente ankommt. Der Verbinder kann aus Zink-Druckguß bestehen. Es sind aber andere Materialien, beispielsweise andere oder bestimmte Kunststoffe (etwa für das Beschlaggehäuse) möglich.

## Patentansprüche

1. Verbinder zum Verbinden zweier Bauelemente, vorzugsweise zum stirnseitigen Verbinden zweier Platten, mit zwei Beschlagteilen, die im Verbindungsbereich jedes Bauelementes vormontierbar sind, mit mindestens einem Zuganker, der jeweils auf einem der Beschlagteile abgestützt ist und der mit Hilfe von Spannmitteln eine die Beschlagteile verbindende Zugkraft ausübt, dadurch gekennzeichnet, daß der Verbinder eine Stelleinrichtung (15,17,18;37,27;90,93;112) zur Einstellung der gegenseitigen Lage der Beschlagteile im wesentlichen senkrecht zur Zugrichtung (13) des Zugankers (10;90,97;103) aufweist, wobei die Stelleinrichtung einen in einem (4) der Beschlagteile (3,4) schwenkbar gelagerten Hebel (15) aufweist, dessen Schwenkachse (16) senkrecht zur Zugrichtung (13) des Zugankers (10) und senkrecht zur Verstellrichtung der Stelleinrichtung liegt, und daß der Hebel (15) einen aus dem einen Beschlagteil (4) vorspringenden Verstellarm (15') aufweist, der zum Eingriff in eine korrespondierende Ausnehmung (21) im anderen Beschlagteil (3) bestimmt ist.

2. Verbinder nach Anspruch 1, dadurch gekennzeichnet, daß der Hebel als zweiarmiger Hebel (15) ausgebildet ist, dessen einer Arm (15') den Verstellarm bildet und an dessen anderem Arm (15") eine im Beschlagteil (4) angeordnete Einstellvorrichtung (17,18) angreift.

3. Verbinder nach Anspruch 2, dadurch gekennzeichnet, daß die Einstellvorrichtung aus zwei parallelen, durch den Arm (15") des Hebels (15) geführten Schrauben (17,18) besteht, von denen die eine (17) durch eine Bohrung (22) im Hebel (15) geführt ist und in ein Gewinde (23) des Beschlagteiles (4) einschraubbar ist, wobei sie mit dem Schraubenkopf den Arm (15") des Hebels (15) in eine erste Richtung verschwenkt, und von denen die andere Schraube (18) durch ein Gewinde (24) im Arm (15") des Hebels (15) geführt ist und sich mit ihrem Schaft (18') am Beschlagteil (4) abstützt, wobei sie den Arm (15") des Hebels (15) in die zweite Richtung verschwenkt.

4. Verbinder nach einem der Ansprüche 1 bis 3, dadurch gekennzeichnet, daß der Verstellarm (15') an seinem Ende eine Verdickung (19) aufweist, deren Dicke im wesentlichen gleich der lichten Weite der zugehörigen Ausnehmung (21) im anderen Beschlagteil (3) ist.

5. Verbinder nach einem der Ansprüche 1 bis 4, dadurch gekennzeichnet, daß der Hebel (15) im wesentlichen plattenförmig ausgebildet ist und vorzugsweise einen Großteil der Beschlagteilbreite einnimmt.

6. Verbinder nach einem der Ansprüche 1 bis 5, dadurch gekennzeichnet, daß der Zuganker (10) zur Montage zunächst vollständig in einen (4) der Beschlagteile (3,4) einschiebbar ist.

7. Verbinder nach einem der Ansprüche 1 bis 6, dadurch gekennzeichnet, daß der Zuganker aus einer in einem Beschlagteil (4) gelagerten Federzunge (10) besteht, die bei zusammengeschobenen Beschlagteilen (3,4) mindestens eine Nase (11) im anderen Beschlagteil (3) hintergreift und die durch Spannmittel (12,14,14') eine Zugkraft auf die Nase(n) (11) ausübt.

8. Verbinder nach Anspruch 7, dadurch gekennzeichnet, daß die Spannmittel aus einem über eine Schraube (12) senkrecht zur Zugrichtung (13) verstellbaren Spannkörper (14) bestehen, der über eine zur Verstellrichtung schräge Fläche (14') die Federzunge (10) in Zugrichtung (13) verschiebt.

9. Verbinder nach Anspruch 6 und einem der Ansprüche 7 oder 8, dadurch gekennzeichnet, daß die Federzunge (10) ein in Zugrichtung (13) verlaufendes Langloch (10') aufweist, in dessen einem Ende die Spannmittel (14') angreifen.

10. Verbinder nach einem der Ansprüche 1 bis 9, dadurch gekennzeichnet, daß die Spannmittel (12,14,14') für den Zuganker (10) und die wesentlichen Elemente der Stelleinrichtung (15,16,17,18) zur Einstellung der gegenseitigen Lage der Bauelemente (1,2) in ein und demselben Beschlagteil (4) angeordnet sind.

11. Verbinder nach Anspruch 5 und 10, dadurch gekennzeichnet, daß der plattenförmige Hebel (15) eine Aussparung (27) aufweist, in der die Spannmittel (12,14,14') für den Zuganker (10) angeordnet sind.

12. Verbinder zum Verbinden zweier Bauelemente, vorzugsweise zum stirnseitigen Verbinden zweier Platten, mit zwei Beschlagteilen, die im Verbindungsbereich jedes Bauelementes vormontierbar sind, mit mindestens einem Zuganker, der jeweils auf einem der Beschlagteile abgestützt ist und der mit Hilfe von Spannmitteln eine die Beschlagteile verbindende Zugkraft ausübt, dadurch gekennzeichnet, daß der Verbinder eine Stelleinrichtung (15,17,18;37,27;90,93;112) zur Einstellung der gegenseitigen Lage der Beschlagteile im wesentlichen senkrecht zur Zugrichtung (13) des Zugankers (10;90,97;103) aufweist, wobei die Stelleinrichtung um den Zuganker (10) herum angeordnet ist.

13. Verbinder nach Anspruch 12, dadurch gekennzeichnet, daß ein Stellteil der Stelleinrichtung eine in einem der zu verbindenden Bauelemente (Arbeitsplatte 2) konzentrisch zum Zuganker (10) anzuordnende Hülse (31) ist, die an ihrem Stirnende einen exzentrisch liegenden Vorsprung (37) hat, der in eine Höhlung (28) des zweiten Stellmittels (Hülse 27) greift, das im andern zu verbindenden Bauelement (Arbeitsplatte 1) konzentrisch zum Zuganker (10) anbringbar ist und mindestens eine Wand (40,41) hat, die im Zusammenwirken mit der Drehlage des Vorsprungs (37) die gegenseitige Lage der zu verbindenen Beschlagteile bestimmt.

14. Verbinder nach Anspruch 13, dadurch gekennzeichnet, daß die Höhlung (28) des zweiten Stellmittels (Hülse 27) einen im wesentlichen rechteckigen Querschnitt hat.

15. Verbinder nach Anspruch 13 oder 14, dadurch gekennzeichnet, daß die Hülse (31) in einer in dem zu verbindenden Bauelement undrehbar gehaltenen Buchse (32) sitzt und dieser gegenüber in beliebiger Drehlage verstellbar und fixierbar ist.

16. Verbinder nach Anspruch 12, dadurch gekennzeichnet, daß in einem der zu verbindenden Bauelemente (Arbeitsplatte 31) zwei Stellteile angebracht sind, von denen das innere als Hülse (52) in einer Bohrung (54) passend den Zuganker (10) aufnimmt und mit einer zu dieser Bohrung exzentrisch liegenden Zylinderfläche drehbar in der Bohrung (51) einer als äußeres Stellteil dienenden Buchse (49) geführt ist, die an ihrer exzentrisch zu dieser Bohrung (51) liegenden Umfangsfläche drehbar in dem zu verbindenden Bauelement gelagert ist, und daß der Zuganker (10) in dem andern der zu verbindenden Bauelemente, insbesondere mit Hilfe einer Hülse (48), passend gelagert ist.

17. Verbinder nach Anspruch 16, dadurch gekennzeichnet, daß die beiden Stellteile (Hülse 52 und Buchse 49) in jeder Drehlage gegeneinander und gegen das sie aufnehmende Bauelement feststellbar sind, insbesondere durch Festklemmen.

18. Verbinder nach einem der Ansprüche 12 bis 17, dadurch gekennzeichnet, daß die Widerlager des Zugankers (10) jeweils gegen eine bogenförmige Endfläche der sie aufnehmenden Aussparung in den Bauelementen anliegen und eine quer zum Zuganker (10) liegende Anlagefläche haben, an welcher an einem der Widerlager ein Kopf des Zugankers (10), am andern Widerlager eine diesen anspannende Mutter anliegt.

19. Verbinder nach einem der Ansprüche 13 bis 18, dadurch gekennzeichnet, daß die zwei Stellteile durch eine Schraubverbindung gegeneinander festklemmbar sind.

20. Verbinder zum Verbinden zweier Bauelemente, vorzugsweise zum stirnseitigen Verbinden zweier Platten, mit zwei Beschlagteilen, die im Verbindungsbereich jedes Bauelementes vormontierbar sind, mit mindestens einem Zuganker, der jeweils auf einem der Beschlagteile abgestützt ist und der mit Hilfe von Spannmitteln eine die Beschlagteile verbindende Zugkraft ausübt, dadurch gekennzeichnet, daß der Verbinder eine Stelleinrichtung (15,17,18;37,27;90,93;112) zur Einstellung der gegenseitigen Lage der Beschlagteile im wesentlichen senkrecht zur Zugrichtung (13) des Zugankers (10;90,97;103) aufweist und daß der Zuganker (90,97;103) und die Stelleinrichtung (90,93) zum Transport bzw. Lagerung und/oder zum Instellung bringen der beiden Bauelemente vollständig in den bzw. die Beschlagteil(e) (4) einschiebbar bzw. zurückziehbar sind.

21. Verbinder nach Anspruch 20, dadurch gekennzeichnet, daß zur unbelasteten Verstellung des Zugankers (90,97) und/oder der Stelleinrichtung (90,93) ein Zahnstangenantrieb (99,100) vorgesehen ist, bei dem durch Andrehen des Ritzels (99) ein lineares Verschieben des Zugankers (90,97) und/oder der Stelleinrichtung (90,93) erfolgt.

22. Verbinder nach Anspruch 20 oder 21, dadurch gekennzeichnet, daß im einen Beschlagteil (4) ein in ihm höhenverstellbar gelagerter Verbindungsteil (90) vorgesehen ist, der zum Justieren der Bauelemente mit seinem vorstehenden Ende (90") am anderen Beschlagteil (3) des anderen Bauelementes anliegt, daß der Verbindungsteil (90) in seinem Endbereich eine lösbar mit dem anderen Beschlagteil (3) verbindbare Zugübertragungseinrichtung (97) aufweist, und daß der Verbindungsteil (90) ohne Änderung seiner Höhenlage unter Ausübung einer Zugkraft auf den anderen Beschlagteil (3) in den einen Beschlagteil (4) zurückziehbar bzw. -spannbar ist.

23. Verbinder nach Anspruch 22, dadurch gekennzeichnet, daß der Verbindungsteil im wesentlichen aus einem Langlöchern (92) des einen Beschlagteiles (4) verschwenkbar gelagerten, vorzugsweise zweiarmigen Hebel (90) besteht

24. Verbinder nach Anspruch 22 oder 23, dadurch gekennzeichnet, daß der Verbindungsteil (90) mindestens eine in Zugrichtung verlaufende Leiste (90') aufweist, die in einer höhenverstellbaren Nut, vorzugsweise in einem höhenverstellbaren Nutenstein (93) des einen Beschlagteiles (4) geführt ist.

25. Verbinder nach einem der Ansprüche 22 bis 24, dadurch gekennzeichnet, daß der Verbindungsteil (90) gabelförmig ausgebildet ist, wobei die Gabelschenkel als Höhenverstellarme und Zuganker in den anderen Beschlagteil (3) reichen und am im wesentlichen quer zur Zugrichtung verlaufenden, vorzugsweise leicht bombierten Gabelsteg (90"') eine verstellbare Exzenternocke (98) anliegt.

26. Verbinder nach einem der Ansprüche 22 bis 25, dadurch gekennzeichnet, daß der Verbindungsteil (90) an seinem dem anderen Beschlagteil (3) zugewandten Ende eine beim Zusammenschieben der Beschlagteile automatische in eine Gegenrast (96) des anderen Beschlagteiles (3) einfallende Klinke (97) aufweist.

27. Verbinder nach Anspruch 26, dadurch gekennzeichnet, daß die Klinke (97) schwenkbar gelagert ist und einen Fortsatz (101) aufweist, über den sie in einer bestimmten Stellung der Spannmittel, beispielsweise der Exzenternocke (98), von diesen in ausgeklinktem Zustand haltbar ist.

28. Verbinder nach einem der Ansprüche 22 bis 27, dadurch gekennzeichnet, daß der Verbindungsteil (90) an seinem Ende (90"') bombiert ist, wobei die Dicke der Bombierung(en) der lichten Weite einer Ausnehmung (95) des anderen Beschlagteiles (3) entspricht.

29. Verbinder zum Verbinden zweier Bauelemente, vorzugsweise zum stirnseitigen Verbinden zweier Platten, mit zwei Beschlagteilen, die im Verbindungsbereich jedes Bauelementes vormontierbar sind, mit mindestens einem Zuganker, der jeweils auf einem der Beschlagteile abgestützt ist und der mit Hilfe von Spannmitteln eine die Beschlagteile verbindende Zugkraft ausübt, dadurch gekennzeichnet, daß der Verbinder eine Stelleinrichtung (15,17,18;37,27;90,93;112) zur Einstellung der gegenseitigen Lage der Beschlagteile im wesentlichen senkrecht zur Zugrichtung (13) des Zugankers (10;90,97;103) aufweist, daß die Stelleinrichtung eine in einem Beschlagteil (3 bzw. 4) gelagerte und senkrecht zur Zugrichtung höhenverstellbare Scheibe (112) aufweist und daß die Stelleinrichtung weiters im anderen Beschlagteil (4 bzw. 3) eine Nut (113) bzw. einen Schlitz (120) umfaßt, in die bzw. den die Scheibe (112) in Verbindungsstellung der Beschlagteile (3,4) mit einem Teil ihres Umfangbereiches eingreift.

30. Verbinder nach Anspruch 29, dadurch gekennzeichnet, daß die Scheibe (112) an einer schwenkbaren, zur Nut (113) hin federbelasteten Wippe (110) drehbar und höhenverstellbar gelagert ist.

31. Verbinder nach Anspruch 29 oder Anspruch 30, dadurch gekennzeichnet, daß die Nut (113) quer zur Zugrichtung an der Stirnseite eines beim Verbinden in den einen Beschlagteil 83) reichenden Fortsatzes (103) des anderen Beschlagteiles (4) ausgebildet ist.

32. Verbinder nach Anspruch 29, dadurch gekennzeichnet, daß ein Fortsatz (103) des einen Beschlagteiles 84) an seiner Stirnseite die höhenverstellbare Scheibe (112) trägt und daß der Schlitz (120), in den die Scheibe (112) eingreift, in einem in Zugrichtung nachgebenden Federblatt (118) des anderen Beschlagteiles (3) ausgebildet ist.

33. Verbinder nach Anspruch 31 oder 32, dadurch gekennzeichnet, daß der Fortsatz (103) einen senkrecht zur Zugrichtung schraubbaren Zapfen bzw. Keil (107) aufweist, der sich in Verbindungsstellung der beiden Beschlagteile (3,4) an einer Schrägfläche (115) des anderen Beschlagteiles (3) abstützt, sodaß er zum Verbinden eine Kraft in Fortsatzrichtung ausübt.

34. Verbinder nach Anspruch 20 und einem der Ansprüche 31 bis 33, dadurch gekennzeichnet, daß der Fortsatz (103) in Zugrichtung verschiebbar im Beschlagteil (4) gelagert ist, wobei zumindest ein Anschlag (116) den Verschiebeweg begrenzt.

35. Verbinder nach Anspruch 34, dadurch gekennzeichnet, daß der Fortsatz (103) in Richtung ausgefahrene Stellung federbelastet ist.

36. Verbinder nach einem der Ansprüche 1 bis 35, dadurch gekennzeichnet, daß die Beschlagteile jeweils ein zweiteiliges Gehäuse (5,6) aufweisen, in dem der Zuganker (90,97), die Spannmittel (98) und die Stelleinrichtung (90,93) untergebracht sind.

37. Verbinder nach einem der Ansprüche 1 bis 36, dadurch gekennzeichnet, daß die beiden Beschlagteile (3,4) des Verbinders in den Außenabmessungen jeweils gleiche Beschlagteiltöpfe (3',4') mit symmetrisch zur Zugrichtung abstehenden Befestigungsflanschen (3",4") aufweisen, die vor dem Verbinden der Bauelemente (1,2) in Aussparungen (104,105) dieser Bauelemente (1,2) einsetzbar sind.

38. Verbinder zum Verbinden zweier Bauelemente, vorzugsweise zum stirnseitigen Verbinden zweier Platten, mit zwei Beschlagteilen, die im Verbindungsbereich jedes Bauelementes vormontierbar sind, mit mindestens einem Zuganker, der jeweils auf einem der Beschlagteile abgestützt ist und der mit Hilfe von Spannmitteln eine die Beschlagteile verbindende Zugkraft ausübt, dadurch gekennzeichnet, daß der Verbinder eine Stelleinrichtung (15,17,18;37,27;90,93;112) zur Einstellung der gegenseitigen Lage der Beschlagteile im wesentlichen senkrecht zur Zugrichtung (13) des Zugankers (10;90,97;103) aufweist und daß der Verbinder zwei gleiche Grundbeschläge (3a,3b) aufweist, die in den beiden zu verbindenden Bauelementen befestigbar sind, und daß weiters ein vor dem Verbinden der Beschlagteile wahlweise in einen (3a) dieser Grundbeschläge (3a,3b) einsetzbarer Einsatzteil (121) vorgesehen ist, über den sowohl die gegenseitige Lage der Beschlagteile (3,4) senkrecht zur Zugrichtung festlegbar als auch eine Zugkraft in Zugrichtung auf den anderen Grundbeschlag (3b) ausübbar ist.

39. Verbinder nach Anspruch 38, dadurch gekennzeichnet, daß der Einsatzteil (121) im Grundbeschlag (3a) in einer in Zugrichtung verlaufenden Nut-Feder-Verbindung gelagert ist.

40. Verbinder nach Anspruch 39, dadurch gekennzeichnet, daß der Verschiebeweg des Einsatzteiles (121) durch einen in den Einsatzteil (121) eindrückbaren Federbolzen (122), der in einem zur Nut (113) parallelen Langloch (123) des Grundbeschlages (3a) läuft, begrenzt ist.

41. Verbinder nach einem der Ansprüche 38 bis 40, dadurch gekennzeichnet, daß eine Einstellvorrichtung (130) zur Festlegung der Lage, insbesondere des Abstandes vom Verbindungsbereich, des Einsatzteiles (121) im Grundbeschlag (3a) vor dem Verbinden der Beschlagteile (3,4) vorgesehen ist.

42. Verbinder nach Anspruch 40 und 41, dadurch gekennzeichnet, daß eine verstellbare Anschlagschraube (130) von der Stirnseite des Grundbeschlages (3a) aus in das Langloch (122) reicht und den Verschiebeweg des Federbolzens (122) begrenzt.

43. Verbinder nach einem der Ansprüche 38 bis 42, dadurch gekennzeichnet, daß jeder Grundbeschlagteil (3a, 3b) einen in Zugrichtung verstellbaren Spannhaken (127), 127') aufweist, wobei der Spannhaken (127) jenes Grundbeschlages (3a), in den der Einsatzteil (121) eingesetzt ist, inaktiv ist und der der Spannhaken (127') des anderen Grundbeschlages (3b) mit dem Zuganker (10) des Einsatzteiles (121) zusammenwirkt.

44. Verbinder nach einem der Ansprüche 38 bis 43, dadurch gekennzeichnet, daß der Einsatzteil (121) einen im einen Grundbeschlag (3a) einsetzbaren Körper (125) aufweist, aus dem nebeneinander ein Zuganker (10) und ein Fortsatz (110) zur Einstellung der gegenseitigen Lage der Beschlagteile (3,4) vorsteht.

45. Verbinder nach Anspruch 44, dadurch gekennzeichnet, daß der Zuganker aus einer endseitig mit einer Aufnahmeöffnung für Spannmittel (128') des anderen Beschlagteiles (3b) versehenen, elastischen Federzunge (10) besteht.

46. Verbinder nach Anspruch 44 oder 45, dadurch gekennzeichnet, daß der Fortsatz (110) zur Höhenverstellung um eine zur Zugrichtung senkrechte Drehachse (126) verschwenkbar im Körper (125) des Einsatzsteiles (121) gelagert ist und am Ende eine höhenverstellbare Scheibe (112) trägt, die in einer in Zugrichtung verlaufenden Nut (113) des anderen Beschlagteiles (3b) eingreift, wobei der Fortsatz (110) in Richtung dieser Nut (113) federbelastet ist.

47. Verbinder nach Anspruch 39 und 46, dadurch gekennzeichnet, daß jene Nut (113), die im einen Beschlagteil (3b) zur Aufnahme der Scheibe (112) vorgesehen ist, im identisch ausgebildeten anderen Grundbeschlag (3a) zur Aufnahme des Körpers (125) des Einsatzteiles (121) dient.

48. Verbinder nach Anspruch 29, 46 oder 49, dadurch gekennzeichnet, daß die Scheibe (112) im Bereich des Umfanges zur leichteren Einführung in die Nut (113) abgeschrägt ist.

49. Verbinder nach einem der Ansprüche 1 bis 48, dadurch gekennzeichnet, daß der Verbinder im wesentlichen aus Zinkdruckguß besteht.

## Claims

1. Connector for connecting two structural members, preferably for connecting the ends of two panels, having two fitting parts which may be preassembled in the connection region of each structural member, having at least one tie rod which is supported on a respective one of the fitting parts and with the aid of tension means exerts a tensile force which connects the fitting parts, characterized in that the connector has a setting device (15, 17, 18; 37, 27; 90, 93; 112) for setting the mutual position of the fitting parts substantially at right angles to the direction of pull (13) of the tie rod (10; 90, 97; 103), the setting device having a lever (15) which is supported so as to swivel in one (4) of the fitting parts (3, 4) and whose swivelling axis (16) lies at right angles to the direction of pull (13) of the tie rod (10) and at right angles to the direction of adjustment of the setting device, and that the lever (15) has an adjusting arm (15') which projects out of the one fitting part (4) and is intended for engagement into a corresponding recess (21) in the other fitting part (3).

2. Connector according to claim 1, characterized in that the lever takes the form of a two-armed lever (15), one arm (15') of which forms the adjusting arm and upon the other arm (15") of which an adjusting apparatus (17, 18) disposed in the fitting part (4) acts.

3. Connector according to claim 2, characterized in that the adjusting apparatus comprises two parallel screws (17, 18) passed through the arm (15") of the lever (15), of which the one screw (17) is passed through a bore (22) in the lever (15) and may be screwed into a thread (23) of the fitting part (4), in which case said screw with its screw head then swivels the arm (15") of the lever (15) in a first direction, and of which the other screw (18) is passed through a thread (24) in the arm (15") of the lever (15) and is supported by its shank (18') on the fitting part (4), in which case said screw then swivels the arm (15") of the lever (15) in the second direction.

4. Connector according to one of claims 1 to 3, characterized in that the adjusting arm (15') has on its end an enlargement (19), whose thickness substantially corresponds to the inside width of the associated recess (21) in the other fitting part (3).

5. Connector according to one of claims 1 to 4, characterized in that the lever (15) is substantially plate-shaped and preferably takes up most of the fitting part width.

6. Connector according to one of claims 1 to 5, characterized in that the tie rod (10), for assembly, is first fully insertable into one (4) of the fitting parts (3, 4).

7. Connector according to one of claims 1 to 6, characterized in that the tie rod comprises a spring tongue (10), which is supported in one fitting part (4) and which, when the fitting parts (3, 4) are pushed together, engages behind at least one lug (11) in the other fitting part (3) and by means of tension means (12, 14, 14') exerts a tensile force upon the lug(s) (11).

8. Connector according to claim 7, characterized in that the tension means comprise a tension body (14), which via a screw (12) is adjustable at right angles to the direction of pull (13) and, via a surface (14') inclined relative to the direction of adjustment, displaces the spring tongue (10) in the direction of pull (13).

9. Connector according to claim 6 and one of claims 7 or 8, characterized in that the spring tongue (10) has an oblong hole (10') which extends in the direction of pull (13) and in one end of which the tension means (14') act.

10. Connector according to one of claims 1 to 9, characterized in that the tension means (12, 14, 14') for the tie rod (10) and the basic elements of the setting device (15, 16, 17, 18) for setting the mutual position of the structural members (1, 2) are disposed in one and the same fitting part (4).

11. Connector according to claim 5 and 10, characterized in that the plate-shaped lever (15) has a recess (27) in which the tension means (12, 14, 14') for the tie rod (10) are disposed.

12. Connector for connecting two structural members, preferably for connecting the ends of two panels, having two fitting parts which may be preassembled in the connection region of each structural member, having at least one tie rod which is supported on a respective one of the fitting parts and with the aid of tension means exerts a tensile force which connects the fitting parts, characterized in that the connector has a setting device (15, 17, 18; 37, 27; 90, 93; 112) for setting the mutual position of the fitting parts substantially at right angles to the direction of pull (13) of the tie rod (10; 90, 97; 103), the setting device being disposed around the tie rod (10).

13. Connector according to claim 12, characterized in that one setting part of the setting device is a sleeve (31), which is to be disposed in one of the structural members to be connected (work panel 2) concentrically to the tie rod (10) and which has at its front end an eccentrically disposed projection (37) engaging into a cavity (28) of the second setting means (sleeve 27), which may be provided in the other structural member to be connected (work panel 1) concentrically to the tie rod (10) and has at least one wall (40, 41) which, in cooperation with the angular position of the projection (37), determines the mutual position of the fitting parts to be connected.

14. Connector according to claim 13, characterized in that the cavity (28) of the second setting means (sleeve 27) is substantially rectangular in cross-section.

15. Connector according to claim 13 or 14, characterized in that the sleeve (31) is seated in a bush (32) non-rotatably held in the structural member to be connected and is adjustable and lockable in any angular position relative to said bush.

16. Connector according to claim 12, characterized in that provided in one of the structural members to be connected (work panel 31) are two setting parts, of which the inner one, fitting as a sleeve (52) in a bore (54), receives the tie rod (10) and with a cylinder surface lying eccentrically relative to said bore is guided rotatably in the bore (51) of a bush (49) serving as an outer setting part, which is supported at its peripheral surface lying eccentrically relative to said bore (51) rotatably in the structural member to be connected, and that the tie rod (10) is supported, in particular with the aid of a sleeve (48), snugly in the other of the structural members to be connected.

17. Connector according to claim 16, characterized in that the two setting parts (sleeve 52 and bush 49) may be locked, in particular by clamping, in any angular position relative to one another and relative to the structural member receiving them.

18. Connector according to one of claims 12 to 17, characterized in that the abutments of the tie rod (10) in each case rest against a curved end surface of the recess in the structural members which receives them and have a locating face, which lies at right angles to the tie rod (10) and against which rests, at one of the abutments, a head of the tie rod (10) and, at the other abutment, a nut for tensioning the tie rod.

19. Connector according to one of claims 13 to 18, characterized in that the two setting parts may be clamped tightly against one another by means of a screw connection.

20. Connector for connecting two structural members, preferably for connecting the ends of two panels, having two fitting parts which may be preassembled in the connection region of each structural member, having at least one tie rod which is supported on a respective one of the fitting parts and with the aid of tension means exerts a tensile force which connects the fitting parts, characterized in that the connector has a setting device (15, 17, 18; 37, 27; 90, 93; 112) for setting the mutual position of the fitting parts substantially at right angles to the direction of pull (13) of the tie rod (10; 90, 97; 103) and that the tie rod (90, 97; 103) and the setting device (90, 93), for transport or storage purposes and/or for moving the two structural members into position, are insertable or retractable into the fitting part or parts (4).

21. Connector according to claim 20, characterized in that, for no-load adjustment of the tie rod (90, 97) and/or of the setting device (90, 93), a rack-and-pinion drive (99, 100) is provided, in which cranking of the pinion (99) effects a linear displacement of the tie rod (90, 97) and/or of the setting device (90, 93).

22. Connector according to claim 20 or 21, characterized in that there is provided, supported in a vertically adjustable manner, in the one fitting part (4) a connection part (90) which, for adjustment of the structural members, rests with its projecting end (90") against the other fitting part (3) of the other structural member, that the connection part (90) has in its end region a traction transmission device (97) which may be detachably connected to the other fitting part (3), and that the connection part (90), without altering its vertical position, is retractable or re-clampable into the one fitting part (4) while exerting a tensile force upon the other fitting part (3).

23. Connector according to claim 22, characterized in that the connection part substantially comprises a preferably two-armed lever (90) which is supported so as to be capable of swivelling in oblong holes (92) of the one fitting part (4).

24. Connector according to claim 22 or 23, characterized in that the connection part (90) has at least one rail (90') which extends in the direction of pull and is guided in a vertically adjustable groove, preferably in a vertically adjustable sliding block (93) of the one fitting part (4).

25. Connector according to one of claims 22 to 24, characterized in that the connection part (90) is fork-shaped, the fork limbs extending as vertical adjustment arms and tie rod into the other fitting part (3) and an adjustable eccentric cam (98) resting against the fork web (90"') which extends substantially at right angles to the direction of pull and is preferably slightly cambered.

26. Connector according to one of claims 22 to 25, characterized in that the connection part (90) has, at its end facing the other fitting part (3), a pawl (97) which, when the fitting parts are pushed together, automatically drops into a complementary detent (96) of the other fitting part (3).

27. Connector according to claim 26, characterized in that the pawl (97) is supported so as to swivel and has an extension (101) by means of which it may, in a specific position of the tension means, e.g. the eccentric cam (98), be held by said means in the disengaged state.

28. Connector according to one of claims 22 to 27, characterized in that the connection part (90) is cambered at its end (90"'), the depth of the camber(s) corresponding to the inside width of a recess (95) of the other fitting part (3).

29. Connector for connecting two structural members, preferably for connecting the ends of two panels, having two fitting parts which may be preassembled in the connection region of each structural member, having at least one tie rod which is supported on a respective one of the fitting parts and with the aid of tension means exerts a tensile force which connects the fitting parts, characterized in that the connector has a setting device (15, 17, 18; 37, 27; 90, 93; 112) for setting the mutual position of the fitting parts substantially at right angles to the direction of pull (13) of the tie rod (10; 90, 97; 103), that the setting device has a disk (112) supported in one fitting part (3 or 4) and vertically adjustable at right angles to the direction of pull and that the setting device further comprises in the other fitting part (4 or 3) a groove (113) or slot (120) into which the disk (112), in the connection position of the fitting parts (3, 4), engages with a part of its peripheral region.

30. Connector according to claim 29, characterized in that the disk (112) is supported in a rotatable and vertically adjustable manner on a pivoted rocker (110) which is spring-loaded towards the groove (113).

31. Connector according to claim 29 or claim 30, characterized in that the groove (113) is constructed at right angles to the direction of pull in the end face of an extension (103) of the one fitting part (4), which extension in the course of connection extends into the other fitting part (83).

32. Connector according to claim 29, characterized in that an extension (103) of the one fitting part (84) carries on its end face the vertically adjustable disk (112) and that the slot (120), into which the disk (112) engages, is formed in a spring assembly (118) of the other fitting part (3) which yields in the direction of pull.

33. Connector according to claim 31 or 32, characterized in that the extension (103) has a journal or wedge (107) which may be screwed at right angles to the direction of pull and is supported, in the connection position of the two fitting parts (3, 4), on a sloping surface (115) of the other fitting part (3) so as to exert, for connection purposes, a force in the direction of the extension.

34. Connector according to claim 20 and one of claims 31 to 33, characterized in that the extension (103) is supported in the fitting part (4) so as to be displaceable in the direction of pull, with at least one stop (116) limiting the displacement path.

35. Connector according to claim 34, characterized in that the extension (103) is spring-loaded in the direction of the extended position.

36. Connector according to one of claims 1 to 35, characterized in that the fitting parts each have a two-part housing (5, 6) in which the tie rod (90, 97), the tension means (98) and the setting device (90, 93) are accommodated.

37. Connector according to one of claims 1 to 36, characterized in that the two fitting parts (3, 4) of the connector each have, as regards their external dimensions, identical fitting part cups (3', 4'), which have fastening flanges (3", 4") projecting symmetrically to the direction of pull and are insertable, prior to connection of the structural members (1, 2), into recesses (104, 105) of said structural members (1, 2).

38. Connector for connecting two structural members, preferably for connecting the ends of two panels, having two fitting parts which may be preassembled in the connection region of each structural member, having at least one tie rod which is supported on a respective one of the fitting parts and with the aid of tension means exerts a tensile force which connects the fitting parts, characterized in that the connector has a setting device (15, 17, 18; 37, 27; 90, 93; 112) for setting the mutual position of the fitting parts substantially at right angles to the direction of pull (13) of the tie rod (10; 90, 97; 103), and that the connector has two identical basic fittings (3a, 3b) which are fastenable in the two structural members to be connected, and that furthermore an insert part (121) which prior to connection of the fitting parts is selectively insertable into one (3a) of said basic fittings (3a, 3b) is provided, by means of which both the mutual position of the fitting parts (3, 4) at right angles to the direction of pull may be defined and a tensile force in the direction of pull may be exerted upon the other basic fitting (3b).

39. Connector according to claim 38, characterized in that the insert part (121) is supported in the basic fitting (3a) in a tongue-and-groove joint extending in the direction of pull.

40. Connector according to claim 39, characterized in that the displacement path of the insert part (121) is limited by a spring bolt (122), which may be pressed into the insert part (121) and travels in an oblong hole (123), parallel to the groove (113), of the basic fitting (3a).

41. Connector according to one of claims 38 to 40, characterized in that an adjusting apparatus (130) is provided for fixing the position, in particular the distance from the connection region, of the insert part (121) in the basic fitting (3a) prior to connection of the fitting parts (3, 4).

42. Connector according to claim 40 and 41, characterized in that an adjustable stop screw (130) extends from the face of the basic fitting (3a) into the oblong hole (122) and limits the displacement path of the spring bolt (122).

43. Connector according to one of claims 38 to 42, characterized in that each basic fitting part (3a, 3b) has a tension hook (127, 127') adjustable in the direction of pull, the tension hook (127) of each basic fitting (3a), into which the insert part (121) is inserted, being inactive and the tension hook (127') of the other basic fitting (3b) cooperating with the tie rod (10) of the insert part (121).

44. Connector according to one of claims 38 to 43, characterized in that the insert part (121) has a body (125), which is insertable in the one basic fitting (3a) and from which project, adjacent to one another, a tie rod (10) and an extension (110) for adjusting the mutual position of the fitting parts (3, 4).

45. Connector according to claim 44, characterized in that the tie rod comprises an elastic spring tongue (10), which is provided at its end with a location hole for tension means (128') of the other fitting part (3b).

46. Connector according to claim 44 or 45, characterized in that the extension (110), for vertical adjustment, is supported in the body (125) of the insert part (121) so as to swing about an axis of rotation (126) at right angles to the direction of pull and carries on its end a vertically adjustable disk (112), which engages in a groove (113) of the other fitting part (3b) extending in the direction of pull, the extension (110) being spring-loaded in the direction of said groove (113).

47. Connector according to claim 39 and 46, characterized in that each groove (113) provided in the one fitting part (3b) for receiving the disk (112) is used in the identically constructed other basic fitting (3a) to receive the body (125) of the insert part (121).

48. Connector according to claim 29, 46 or 49, characterized in that the disk (112) is bevelled in the region of its periphery to facilitate introduction into the groove (113).

49. Connector according to one of claims 1 to 48, characterized in that the connector substantially comprises a zinc die-casting.

## Revendications

1. Connecteur destiné au raccordement de deux éléments, de préférence au raccordement de deux panneaux par leur côté frontal au moyen de deux ferrures pouvant être montées au préalable dans la zone de raccordement de chaque élément, comportant au moins un tirant d'ancrage, lequel prend appui sur l'une des ferrures et qui, à l'aide de moyens de serrage, exerce une force de traction reliant les ferrures, caractérisé en ce que le connecteur comporte un dispositif de réglage (15, 17, 18 ; 37, 27 ; 90, 93 ; 112) pour assurer le réglage de la position respective des ferrures principalement dans le sens perpendiculaire au sens de la traction (13) du tirant d'ancrage (10 ; 90, 97 ; 103), le dispositif de réglage comportant un levier (15) logé en rotation dans l'une (4) des ferrures (3, 4), dont l'axe de rotation (16) est perpendiculaire au sens de la traction (13) du tirant d'ancrage (10) et perpendiculaire au sens de réglage du dispositif de réglage, et en ce que le levier (15) comporte un bras de réglage (15') sortant d'une des ferrures (4) qui est destiné à s'insérer dans un alésage (21) correspondant pratiqué dans l'autre ferrure (3).

2. Connecteur selon la revendication 1, caractérisé en ce que le levier est réalisé sous forme d'un levier (15) à deux bras, l'un des bras (15') constituant le bras de réglage et l'autre bras (15") s'appliquant contre le dispositif de réglage (17, 18) placé dans la ferrure (4).

3. Connecteur selon la revendication 2, caractérisé en ce que le dispositif de réglage est composé de deux vis (17, 18) parallèles guidées à travers le bras (15") du levier (15), dont l'une, la vis (17), est guidée à travers un perçage (22) pratiqué dans le levier (15) et se visse dans un filetage (23) de la ferrure (4), sa tête faisant ainsi pivoter le bras (15") du levier (15) dans un premier sens, l'autre vis (18) étant guidée à travers un filetage (24) pratiqué dans le bras (15") du levier (15) et prenant appui avec sa tige (18') contre la ferrure (4), faisant ainsi pivoter le bras (15") du levier (15) dans le deuxième sens.

4. Connecteur selon l'une **des** revendications 1 à 3, caractérisé en ce que l'une des extrémités du bras de réglage (15') comporte un épaississement (19), dont la dimension est sensiblement égale à la largeur utile de l'alésage associé (21) pratiqué dans l'autre ferrure (3).

5. Connecteur selon l'une **des** revendications 1 à 4, caractérisé en ce que le levier (15) est pour l'essentiel réalisé en forme de plaque et qu'il occupe de préférence une grande partie de la largeur des ferrures.

6. Connecteur selon l'une **des** revendications 1 à 5, caractérisé en ce que, pour le montage, le tirant d'ancrage (10) peut, dans un premier temps, être entièrement inséré dans l'une (4) des ferrures (3, 4).

7. Connecteur selon l'une **des** revendications 1 à 6, caractérisé en ce que le tirant d'ancrage est constitué d'une languette à ressort (10) logée dans une ferrure (4), laquelle, lorsque les ferrures (3, 4) sont réunies, passe derrière au moins un taquet (11) de l'autre ferrure (3) et exerce une force de traction sur le(s) taquet(s) (11) par l'intermédiaire des moyens de serrage (12, 14, 14').

8. Connecteur selon la revendication 7, caractérisé en ce que les moyens de serrage sont constitués d'un corps de serrage (14), lequel est réglable dans le sens perpendiculaire au sens de la traction (13) au moyen d'une vis (12), et qui déplace la languette à ressort (10) dans le sens de la traction (13) par l'intermédiaire d'une surface (14') inclinée par rapport au sens de réglage.

9. Connecteur selon la revendication 6 et l'une des revendications 7 ou 8 , caractérisé en ce que la languette à ressort (10) comporte un trou oblong (10') dans le sens de la traction (13), dans l'une des extrémités de laquelle agissent les moyens de serrage (14').

10. Connecteur **selon l'une des** revendications 1 à 9, caractérisé en ce que les moyens de serrage (12, 14, 14') du tirant d'ancrage (10), ainsi que les éléments essentiels du dispositif de réglage (15, 16, 17, 18) destinés au réglage de la position respective des éléments (1, 2), sont placés dans une seule et même ferrure (4).

11. Connecteur **selon l'une des** revendications 5 et 10, caractérisé en ce que le levier en forme de plaque (15) comporte un évidement (27), dans lequel sont disposés les moyens de serrage (12, 14, 14') du tirant d'ancrage (10).

12. Connecteur destiné au raccordement de deux éléments, de préférence au raccordement de deux panneaux par leur côté frontal au moyen de deux ferrures pouvant être montées au préalable dans la zone de raccordement de chaque élément, comportant au moins un tirant d'ancrage, lequel prend appui sur l'une des ferrures et qui, à l'aide de moyens de serrage, exerce une force de traction reliant les ferrures, caractérisé en ce que le connecteur comporte un dispositif de réglage (15, 17, 18 ; 37, 27 ; 90, 93 ; 112) pour assurer le réglage de la position respective des ferrures principalement dans le sens perpendiculaire au sens de la traction (13) du tirant d'ancrage (10 ; 90, 97 ; 103), le dispositif de réglage étant disposé autour du tirant d'ancrage (10).

13. Connecteur selon la revendication 12, caractérisé en ce qu'un élément de réglage du dispositif de réglage est constitué d'une douille (31) pouvant être disposée concentriquement par rapport au tirant d'ancrage (10) dans l'un des éléments à relier (panneau de travail 2), dont l'extrémité frontale comporte une partie en saillie (37) qui s'insère dans un cavité (28) du deuxième élément de réglage (douille 27), lequel peut être disposé concentriquement par rapport au tirant d'ancrage (10) dans l'autre élément à relier (panneau de travail 1) et comporte au moins une face plane (40, 41), cette dernière déterminant la position respective des ferrures à relier en fonction de la position de rotation de la partie en saillie (37).

14. Connecteur selon la revendication 13, caractérisé en ce que la section de la cavité (28) du deuxième élément de réglage (douille 27) est pour l'essentiel rectangulaire.

15. Connecteur **selon l'une des** revendications 13 ou 14, caractérisé en ce que la douille (31) est logée dans un coussinet (32) immobilisé dans l'élément à relier et peut être déplacée ou fixée dans celui-ci dans n'importe quelle position de rotation.

16. Connecteur selon la revendication 12, caractérisé en ce que deux éléments de réglage sont montés dans l'un des éléments à relier (panneau de travail 31), dont l'élément interne réalisé sous forme de douille (52) comporte un alésage (54) dans lequel est ajusté le tirant d'ancrage (10), et est guidé en rotation par une surface cylindrique excentrée par rapport à cet alésage dans l'alésage (51) d'un coussinet (49) servant d'élément de réglage extérieur, lequel est logé en rotation dans l'élément à relier par sa surface circonférentielle excentrée par rapport à cet alésage (51), et en ce que le tirant d'ancrage (10) est ajusté dans l'autre élément à relier, en particulier à l'aide d'une douille (48).

17. Connecteur selon la revendication 16, caractérisé en ce que les deux éléments de réglage (la douille 52 et le coussinet 49) peuvent être immobilisés l'un par rapport à l'autre, ou contre l'élément sur lequel ils sont positionnés, en particulier par serrage.

18. Connecteur **selon l'une des** revendications 12 à 17, caractérisé en ce que les butées du tirant d'ancrage (10) prennent appui contre une surface d'extrémité cintrée de l'évidement de l'élément sur lequel elles sont positionnées et comportent une surface d'appui perpendiculaire au tirant d'ancrage (10), contre laquelle prend appui la tête du tirant d'ancrage (10) par l'intermédiaire d'une des butées, l'écrou de serrage de ce dernier prenant appui sur l'autre butée.

19. Connecteur **selon l'une** revendications 13 à 18, caractérisé en ce que les deux éléments de réglage peuvent être serrés l'un par rapport à l'autre par une liaison vissée.

20. Connecteur destiné au raccordement de deux éléments, de préférence au raccordement de deux panneaux par leur côté frontal au moyen de deux ferrures pouvant être montées au préalable dans la zone de raccordement de chaque élément, comportant au moins un tirant d'ancrage, lequel prend appui sur l'une des ferrures et qui, à l'aide de moyens de serrage, exerce une force de traction reliant les ferrures, caractérisé en ce que le connecteur comporte un dispositif de réglage (15, 17, 18 ; 37, 27 ; 90, 93 ; 112) pour assurer le réglage de la position respective des ferrures principalement dans le sens perpendiculaire au sens de la traction (13) du tirant d'ancrage (10 ; 90, 97 ; 103), et en ce que le tirant d'ancrage (90, 97 ; 103) et le dispositif de réglage (90, 93) peuvent être entièrement insérés dans ou retirés de la ou des ferrure(s) (4), et ce pour le transport ou le stockage et/ou la mise en place des deux éléments.

21. Connecteur selon la revendication 20, caractérisé en ce qu'il est prévu un entraînement à crémaillère (99, 100) afin de déplacer à vide le tirant d'ancrage (90, 97) et/ou le dispositif de réglage (90, 93), à l'aide duquel il est obtenu une translation linéaire du tirant d'ancrage (90, 97) et/ou du dispositif de réglage (90, 93) lorsque le pignon (99) est actionné.

22. Connecteur **selon l'une des** revendications 20 ou 21, caractérisé en ce qu'il est prévu un élément de liaison (90) réglable en hauteur dans la ferrure (4), qui, pour ajuster les deux éléments, prend appui par son extrémité en saillie (90") contre l'autre ferrure (3) de l'autre élément, en ce que l'autre extrémité de cet élément de liaison (90) comporte un dispositif de transfert de traction (97) pouvant être relié de façon amovible à la ferrure (3), et en ce que l'élément de liaison (90) peut être retiré ou retendu dans la ferrure (4) sans modification de sa hauteur, et ce sous l'effet d'une force de traction exercée sur l'autre ferrure (3).

23. Connecteur selon la revendication 22, caractérisé en ce que l'élément de liaison est constitué pour l'essentiel d'un levier pivotant (90), de préférence à deux bras, logé dans des trous oblongs (92) de la ferrure (4).

24. Connecteur **selon l'une des** revendications 22 ou 23, caractérisé en ce que l'élément de liaison (90) comporte au moins une nervure (90') dans le sens de la traction, laquelle est guidée dans une rainure réglable en hauteur de la ferrure (4), de préférence dans un coulisseau (93) réglable en hauteur.

25. Connecteur **selon l'une des** revendications 22 à 24, caractérisé en ce que l'élément de liaison (90) a la forme d'une fourche, les bras de la fourche faisant office de bras de réglage en hauteur et de tirant d'ancrage s'introduisant dans l'autre ferrure (3), une came excentrique (98) réglable prenant appui contre le bord de la fourche (90"'), de préférence légèrement bombé, qui est pour l'essentiel perpendiculaire au sens de la traction.

26. Connecteur **selon l'une des** revendications 22 à 25, caractérisé en ce que l'extrémité de l'élément de liaison (90) située du côté de la ferrure (3) comporte un loquet (97), qui s'enclenche automatiquement dans une contre-encoche (96) de l'autre ferrure (3) lors de l'assemblage des ferrures.

27. Connecteur selon la revendication 26, caractérisé en ce que le loquet (97) est pivotant et comporte un prolongement (101), au moyen duquel il peut être maintenu à l'état non enclenché par les moyens de serrage, dans une certaine position de ces derniers, par exemple de la came excentrique (98).

28. Connecteur **selon l'une des** revendications 22 à 27, caractérisé en ce que l'extrémité (90"') de l'élément de liaison (90) est bombée, l'épaisseur de la partie bombée correspondant à la largeur utile d'un évidement (95) de l'autre ferrure (3).

29. Connecteur destiné au raccordement de deux éléments, de préférence au raccordement de deux panneaux par leur côté frontal au moyen de deux ferrures pouvant être montées au préalable dans la zone de raccordement de chaque élément, comportant au moins un tirant d'ancrage, lequel prend appui sur l'une des ferrures et qui, à l'aide de moyens de serrage, exerce une force de traction reliant les ferrures, caractérisé en ce que le connecteur comporte un dispositif de réglage (15, 17, 18 ; 37, 27 ; 90, 93 ; 112) pour assurer le réglage de la position respective des ferrures principalement dans le sens perpendiculaire au sens de la traction (13) du tirant d'ancrage (10 ; 90, 97 ; 103), en ce que le dispositif de réglage comporte un disque (112) logé dans une des ferrures (3 ou 4), lequel est réglable en hauteur dans le sens perpendiculaire au sens de la traction, et en ce que dans l'autre ferrure (4 ou 3) le dispositif de réglage comprend encore une rainure (113) ou une fente (120) dans laquelle une partie circonférentielle du disque (112) s'insère lorsque les ferrures (3, 4) sont en position assemblée.

30. Connecteur selon la revendication 29, caractérisé en ce que le disque (112) est guidé en rotation et réglable en hauteur sur un levier basculant (110) commandé par la tension d'un ressort pouvant pivoter jusqu'à la rainure (113).

31. Connecteur **selon l'une des** revendications 29 ou 30, caractérisé en ce que la rainure (113) est pratiquée dans le sens perpendiculaire au sens de la traction du côté frontal d'un prolongement (103) de la ferrure (4) s'emboîtant dans l'autre ferrure (83) lors de l'assemblage.

32. Connecteur selon la revendication 29, caractérisé en ce que le côté frontal du prolongement (103) de la ferrure (84) est équipé du disque (112) réglable en hauteur, et en ce que la fente (120), dans laquelle s'insère ce disque (112), est pratiquée dans une lame de ressort (118) élastique dans le sens de la traction de l'autre ferrure (3).

33. Connecteur **selon l'une des** revendications 31 ou 32, caractérisé en ce que le prolongement (103) comporte un tourillon ou une clavette (107) dans le sens vertical au sens de la traction, lequel, lorsque les deux ferrures (3, 4) sont assemblées, prend appui contre une surface inclinée (115) de l'autre ferrure (3), et ce afin d'exercer pour l'assemblage une force dans le sens du prolongement.

34. Connecteur selon la revendication 20 et l'une des revendications 31 à 33, **caractérisé** en ce que le prolongement (103) est logé dans la ferrure (4), mobile dans le sens de la traction, cette mobilité étant limitée par au moins une butée (116).

35. Connecteur selon la revendication 34, caractérisé en ce que le prolongement (103) est commandé par la tension d'un ressort jusqu'à sa position déployée.

36. Connecteur **selon l'une des** revendications 1 à 35, caractérisé en ce que les ferrures comportent respectivement une enveloppe (5, 6) en deux parties, dans lesquelles sont placés le tirant d'ancrage (90, 97), les moyens de serrage (98) et le dispositif de réglage (90, 93).

37. Connecteur **selon l,une des** revendications 1 à 36, caractérisé en ce que les parties extérieures des deux ferrures (3, 4) du connecteur comportent respectivement des boîtiers de ferrure (3', 4') identiques équipés de brides de fixation (3", 4") écartées et symétriques par rapport au sens de la traction, qui peuvent être insérés avant le raccordement des éléments (1, 2) dans des évidements (104, 105) pratiqués dans ces éléments (1, 2).

38. Connecteur destiné au raccordement de deux éléments, de préférence au raccordement de deux panneaux par leur côté frontal au moyen de deux ferrures pouvant être montées au préalable dans la zone de raccordement de chaque élément, comportant au moins un tirant d'ancrage, lequel prend appui sur l'une des ferrures et qui, à l'aide de moyens de serrage, exerce une force de traction reliant les ferrures, caractérisé en ce que le connecteur comporte un dispositif de réglage (15, 17, 18 ; 37, 27 ; 90, 93 ; 112) pour assurer le réglage de la position respective des ferrures principalement dans le sens perpendiculaire au sens de la traction (13) du tirant d'ancrage (10 ; 90, 97 ; 103), et en ce que le connecteur comporte deux embases de ferrures (3a, 3b) identiques, lesquelles peuvent être fixées dans les éléments à relier, et en ce qu'il est d'autre part prévu un insert (121) pouvant être facultativement placé dans une (3a) de ces embases de ferrures (3a, 3b) avant l'assemblage des ferrures, lequel permet non seulement de fixer la position respective des ferrures (3, 4) dans le sens vertical au sens de la traction, mais aussi d'exercer une force de traction dans le sens de la traction sur l'autre embase de ferrure (3b).

39. Connecteur selon la revendication 38, caractérisé en ce que l'insert (121) est logé dans l'embase de ferrure (3a) par un assemblage mâle-femelle orienté dans le sens de la traction.

40. Connecteur selon la revendication 39, caractérisé en ce que le mouvement de translation de l'insert (121) est limité par un doigt à ressort (122) pouvant être enfoncé dans l'insert (121), qui est guidé dans un trou oblong (123) parallèle à la rainure (113) de l'embase de ferrure (3a).

41. Connecteur **selon l'une des** revendications 38 à 40, caractérisé en ce qu'il est prévu un dispositif de réglage (130) destiné à déterminer la position, en particulier l'écartement de la zone de raccordement, de l'insert (121) dans l'embase de ferrure (3a) avant l'assemblage des ferrures (3, 4).

42. Connecteur **selon l'une des** revendications 40 et 41, caractérisé en ce qu'une vis de butée réglable (130) prévue sur la face frontale de l'embase de ferrure (3a) débouche dans le trou oblong (123) et limite le mouvement de translation du doigt à ressort (122).

43. Connecteur **selon l'une des** revendications 38 à 42, caractérisé en ce que chaque embase de ferrure (3a, 3b) comporte un crochet de tension (127, 127') réglable dans le sens de la traction, le crochet de tension (127) de l'embase de ferrure (3a) dans laquelle est placé l'insert (121) étant inactif, alors que le crochet de tension (127') de l'autre embase de ferrure (3b) agit conjointement avec le tirant d'ancrage (10) de l'insert (121).

44. Connecteur **selon l'une des** revendications 38 à 43, caractérisé en ce que l'insert (121) comporte un corps (125) pouvant être inséré dans une embase de ferrure (3a), duquel dépassent l'un à côté de l'autre un tirant d'ancrage (10) et un prolongement (110) destinés au réglage de la position respective des ferrures (3, 4).

45. Connecteur selon la revendication 44, caractérisé en ce que le tirant d'ancrage est constitué d'une languette à ressort élastique (10), dont l'extrémité comporte une ouverture destinée à recevoir les moyens de tension (128') de l'autre ferrure (3b).

46. Connecteur selon l'une quelconque des revendications 44 ou 45, caractérisé en ce que le prolongement (110) qui est logé dans le corps (125) de l'insert (121), peut, pour le réglage en hauteur, pivoter autour d'un axe de rotation (126) perpendiculaire au sens de la traction, et en ce que son extrémité est équipée d'un disque (112) réglable en hauteur qui s'insère dans une rainure (113) pratiquée dans le sens de la traction de l'autre ferrure (3b), le prolongement (110) étant commandé par ressort dans le sens de cette rainure (113).

47. Connecteur **selon l'une des** revendications 39 et 46, caractérisé en ce que cette rainure (113), qui est prévue dans une des ferrures (3b) pour le logement du disque (112), sert au logement du corps (125) de l'insert (121) dans l'autre ferrure (3a) de conception identique.

48. Connecteur **selon l'une des** revendications 29, 46 ou 49, caractérisé en ce que la circonférence du disque (112) est biseautée pour faciliter son introduction dans la rainure (113).

49. Connecteur **selon l'une des** revendications 1 à 48, caractérisé en ce que ce connecteur est principalement composé de zinc moulé sous pression.
